(19) Europäisches Patentamt
European Patent Office
Office européen des brevets

(11) EP 4 472 067 A1

(12) **EUROPEAN PATENT APPLICATION**
published in accordance with Art. 153(4) EPC

(43) Date of publication:
**04.12.2024 Bulletin 2024/49**

(21) Application number: **23746673.5**

(22) Date of filing: **12.01.2023**

(51) International Patent Classification (IPC):
***H02S 50/00*** *(2014.01)*

(52) Cooperative Patent Classification (CPC):
**H02S 50/00;** Y02E 10/50

(86) International application number:
**PCT/JP2023/000587**

(87) International publication number:
**WO 2023/145459 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.01.2022 JP 2022011933**

(71) Applicant: **Teikyo University**
**Tokyo 173-8605 (JP)**

(72) Inventor: **KOBAYASHI, Yasuyuki**
**Utsunomiya-shi, Tochigi 320-8551 (JP)**

(74) Representative: **Ström & Gulliksson AB**
**P.O. Box 4188**
**203 13 Malmö (SE)**

# (54) SOLAR BATTERY MODULE ABNORMALITY DETERMINATION SYSTEM, SOLAR BATTERY MODULE ABNORMALITY DETERMINATION METHOD, AND PROGRAM

(57) A photovoltaic module abnormality determination system that determines presence or absence of an abnormality in a parallel resistance component of each of a plurality of photovoltaic cells connected in series to constitute a photovoltaic module, acquires an output current of the photovoltaic module during power generation, acquires a light shielding rate of a determination target photovoltaic cell for the presence or absence of the abnormality in a parallel resistance component, determines that the abnormality is not present in the parallel resistance component of the determination target photovoltaic cell in a case where a light shielding rate range of output current change, in which the output current of the photovoltaic module changes in a case where the light shielding rate of the determination target photovoltaic cell is changed, is between a light shielding rate of 0 and 1 of the determination target photovoltaic cell, and determines that the abnormality is present in the parallel resistance component of the determination target photovoltaic cell in a case where a light shielding rate range of non-output current change, in which the output current of the photovoltaic module hardly changes even in a case where the light shielding rate of the determination target photovoltaic cell is changed, is between the light shielding rate of 0 and 1 of the determination target photovoltaic cell.

FIG. 1

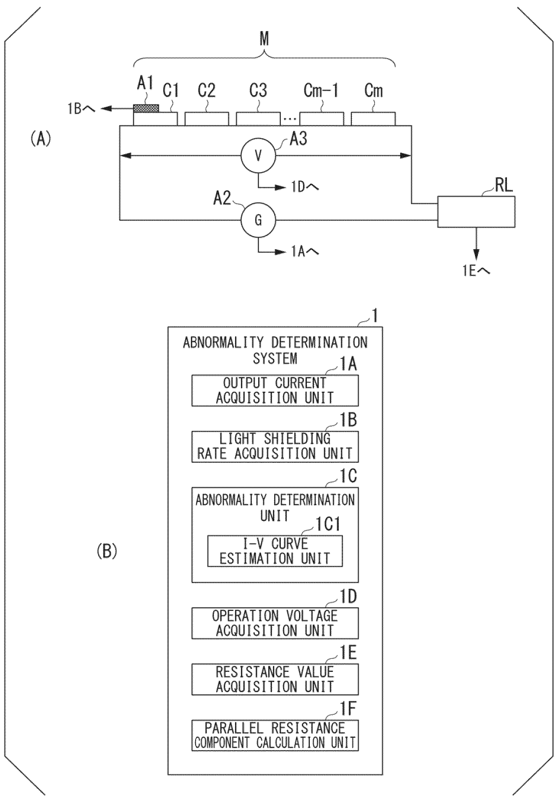


EP 4 472 067 A1

## Description

[Technical Field]

The present invention relates to a photovoltaic module abnormality determination system, a photovoltaic module abnormality determination method, and a program.

Priority is claimed on Japanese Patent Application No. 2022-011933, filed January 28, 2022, the content of which is incorporated herein by reference.

[Background Art]

In the technology disclosed in Patent Document 1, by irradiating one photovoltaic cell of a plurality of photovoltaic cells connected in series to constitute a photovoltaic module with modulated light, a photovoltaic cell in an abnormal state among the plurality of photovoltaic cells is determined.

In the technology disclosed in Patent Document 2, in order to estimate the operation voltage of each of m (m is an integer of 2 or greater) photovoltaic cells connected in series to constitute a photovoltaic module, in a state in which a first photovoltaic cell, which is one of the m photovoltaic cells, is shielded from light, a minute change in the output current of the photovoltaic module is detected while the first photovoltaic cell is irradiated with modulated light, and, in a state in which (m-1) photovoltaic cells other than the first photovoltaic cell of the m photovoltaic cells are light shielded, a minute change in the output current of the photovoltaic module is detected while each of the (m-1) photovoltaic cells is irradiated with modulated light, in a state in which all the m photovoltaic cells are not light shielded, a minute change in the output current of the photovoltaic module is detected while the second photovoltaic cell, which is the estimation target photovoltaic cell of operation voltage among the m photovoltaic cells, is irradiated with modulated light, and a minute change in the output current of the photovoltaic module is detected while a third photovoltaic cell, which is a photovoltaic cell other than the second photovoltaic cell of the m photovoltaic cells is irradiated with modulated light.

The principle of these technologies is that, in a case where only one photovoltaic cell in the photovoltaic module is irradiated with weak modulated light such that the cell voltage (operation voltage of the photovoltaic cell) is not changed, a synchronization signal with the modulated light is generated in the output current of the photovoltaic module at a very small level according to the operation voltage of the photovoltaic cell, so that the synchronization signal is extracted by using an AC current clamp sensor and a lock-in amplifier which are not electrically in contact with the wiring for extracting the output current of the photovoltaic module.

By using this principle, in the technology disclosed in Patent Document 2, m photovoltaic cells are partially light shielded with a mask, and the operation voltage of one photovoltaic cell is quantitatively estimated.

However, with respect to this principle, it can be assumed that all the photovoltaic cells constituting the photovoltaic module have a sufficiently high parallel resistance component $R_{sh}$ (see FIG. 19) to the same extent. Therefore, it is necessary to evaluate the parallel resistance component of each photovoltaic cell before the cell voltage is measured based on the technology disclosed in Patent Document 2.

FIG. 19 is a diagram showing an equivalent circuit of the photovoltaic cell including the parallel resistance component $R_{sh}$.

Here, considering a deterioration phenomenon in the actual photovoltaic module, there is a potential induced degradation (PID) phenomenon derived from a high voltage part in the photovoltaic module or a decrease in the parallel resistance component of the photovoltaic cell derived from current leakage defect of the photovoltaic cells derived from defective manufacturing or the like. The PID phenomenon has attracted attention as a cause of deterioration due to long-term use of a normal module, and, as a method of detecting a deterioration part due to the PID phenomenon, an electroluminescence (EL) method of separating a detection module from a wiring and observing a light emission distribution by injecting a current in a dark box has been put into practical use. However, since it is necessary to stop power generation of a photovoltaic module and the inspection is very burdensome, improvement of observing the PID phenomenon by another method is desirable.

In addition, a method of diagnosing a photovoltaic module using a mask, a light attenuating plate, or the like has also been proposed. In Non Patent Document 1, a method of estimating the unique short-circuit current of a cell #n as I(n,T)/T using the output current I(n,T) of the photovoltaic module in a case where a light attenuating plate having a light transmittance T is placed in the cell #n in the module is reported. However, in this report, the estimation of the short-circuit current of each photovoltaic cell in the photovoltaic module is the purpose, and the parallel resistance component of each photovoltaic cell is not evaluated.

In addition, Non Patent Document 2 reports observation results of temporal changes in a case where one photovoltaic cell in the photovoltaic module is partially light shielded. A film having a light transmittance of 20% is divided into two cases of 50% and 25% of a cell area and is observed with a thermographic camera. In a case where the entire non-light-shielding portion of the film is at a high temperature and the bypass diode is cut off and left in this state, it is observed that a further high temperature hot spot is generated in the non-light-shielding portion of the film and the hot spot is a conductive defect, that is, a low parallel resistance component. However, in this report, only the phenomenon of the generation of the conductive hot spot is described, and estimation of the parallel resistance component of each photovoltaic cell in the photovoltaic module is not targeted as the purpose.

[Citation List]

[Patent Documents]

[Patent Document 1]

Japanese Patent No. 6712816

[Patent Document 2]

PCT International Publication No. WO 2020/122105

[Non Patent Documents]

[Non Patent Document 1]

Tadamasa Koyanagi, Takeshi Kojima, "Failure diagnosis of photovoltaic module by light attenuation method", Proceedings of the Solar and Wind Energy Symposium (2002), pp. 419 to 422.

[Non Patent Document 2]

Y Nagata, M. Yamanaka, and H. Ohno, "Partial light shielding and hot spots in PV cells," Proceedings of the Solar and Wind Energy Symposium (2014), pp. 63 to 66.

[Summary of Invention]

[Technical Problem]

In view of the above, an object of the present invention is to provide a photovoltaic module abnormality determination system, a photovoltaic module abnormality determination method, and a program with which it is possible to determine the presence or absence of an abnormality in a parallel resistance component of each of a plurality of photovoltaic cells connected in series to constitute the photovoltaic module without using modulated light irradiation or the like.

That is, an object of the present invention is to provide a photovoltaic module abnormality determination system, a photovoltaic module abnormality determination method, and a program with which it is possible to determine the presence or absence of an abnormality in a parallel resistance component of each of a plurality of photovoltaic cells connected in series to constitute the photovoltaic module using a simple method.

[Solution to Problem]

According to an aspect of the present invention, there is provided a photovoltaic module abnormality determination system that determines presence or absence of an abnormality in a parallel resistance component of each of a plurality of photovoltaic cells connected in series to constitute a photovoltaic module, the photovoltaic module abnormality determination system comprising: an output current acquisition unit configured to acquire an output current of the photovoltaic module during power generation; a light shielding rate acquisition unit configured to acquire a light shielding rate of a determination target photovoltaic cell that is a photovoltaic cell corresponding to a determination target for presence or absence of an abnormality in a parallel resistance component; and an abnormality determination unit configured to determine that the abnormality is not present in the parallel resistance component of the determination target photovoltaic cell in a case where a light shielding rate range of output current change, which is a range of the light shielding rate of the determination target photovoltaic cell in which the output current of the photovoltaic module changes in accordance with a change in the light shielding rate of the determination target photovoltaic cell in a case where the light shielding rate of the determination target photovoltaic cell is changed, is between a light shielding rate of 0 and 1 of the determination target photovoltaic cell, and determine that the abnormality is present in the parallel resistance component of the determination target photovoltaic cell in a case where a light shielding rate range of non-output current change, which is a range of the light shielding rate of the determination target photovoltaic cell in which the output current of the photovoltaic module hardly changes even in a case where the light shielding rate of the determination target photovoltaic cell is changed, is between the light shielding rate of 0 and 1 of the determination target photovoltaic cell.

In the photovoltaic module abnormality determination system according to an aspect of the present invention, wherein in a case where the light shielding rate range of the non-output current change is between the light shielding rate of 0 and 1 of the determination target photovoltaic cell, and in a case where the light shielding rate range of the non-output current change is in a range where the light shielding rate of the determination target photovoltaic cell is a first threshold value or less, and the output current of the photovoltaic module is changed in accordance with a change in the light shielding rate of the determination target photovoltaic cell in a case where the light shielding rate of the determination target photovoltaic cell is changed in a range in which the light shielding rate of the determination target photovoltaic cell is greater than the first threshold value, the abnormality determination unit determines that the abnormality is present in the parallel resistance component of the determination target photovoltaic cell.

In the photovoltaic module abnormality determination system according to the aspect of the present invention, wherein the abnormality determination unit includes an I-V curve estimation unit that estimates an I-V curve of the plurality of photovoltaic cells, the I-V curve estimation unit estimates an I-V curve of the determination target photovoltaic cell based on the output current of the photovoltaic module during power generation acquired by the output current acquisition unit, the light shielding rate of the determination target photovoltaic cell acquired by the light shielding rate acquisition unit, and a combined I-V curve of the photovoltaic cells other than the determination target photovoltaic cell in the photovoltaic module, and the abnormality determination unit determines the presence or absence of the abnormality in the parallel resistance component of the determination target photovoltaic cell based on the I-V curve of the determination target photovoltaic cell estimated by the I-V curve estimation unit.

In the photovoltaic module abnormality determination system according to the aspect of the present invention, wherein a shape of the combined I-V curve in a case where a resistance value of a load resistor connected to the photovoltaic module during power generation is substantially 0 is different from a shape of the combined I-V curve in a case where the resistance value of the load resistor connected to the photovoltaic module during power generation is greater than 0.

In the photovoltaic module abnormality determination system according to the aspect of the present invention, may further include a parallel resistance component calculation unit configured to calculate a value of the parallel resistance component of the determination target photovoltaic cell which is determined that the abnormality is present by the abnormality determination unit.

In the photovoltaic module abnormality determination system according to the aspect of the present invention, wherein in a case where a resistance value of a load resistor connected to the photovoltaic module during power generation is substantially 0, the parallel resistance component calculation unit calculates the value of the parallel resistance component of the determination target photovoltaic cell which is determined that the abnormality is present by the abnormality determination unit based on an operation voltage of the photovoltaic module, a value of a V axis at an intersection of the combined I-V curve and the V axis, a value of an I axis at an intersection of the combined I-V curve and the I axis, and a value of the light shielding rate of the determination target photovoltaic cell in which the output current of the photovoltaic module decreases from the value of the I axis in a case where the light shielding rate of the determination target photovoltaic cell is increased.

In the photovoltaic module abnormality determination system according to the aspect of the present invention, wherein in a case where a resistance value of a load resistor connected to the photovoltaic module during power generation is greater than 0, the parallel resistance component calculation unit calculates the value of the parallel resistance component of the determination target photovoltaic cell which is determined that the abnormality is present by the abnormality determination unit based on the resistance value of the load resistor, a value of a V axis at an intersection of the combined I-V curve and the V axis, a value of an I axis at an intersection of the combined I-V curve and the I axis, and a value of the light shielding rate of the determination target photovoltaic cell in which the output current of the photovoltaic module decreases from the value of the I axis in a case where the light shielding rate of the determination target photovoltaic cell is increased.

In the photovoltaic module abnormality determination system according to the aspect of the present invention, wherein the light shielding rate of the determination target photovoltaic cell is changed by changing a state in which an entirety or a part of the determination target photovoltaic cell is covered with at least any of a light attenuating film, a porous plate, a net, or a complete light shielding body.

In the photovoltaic module abnormality determination system according to the aspect of the present invention, wherein in a case where the light shielding rate of the determination target photovoltaic cell is 1 and the output current of the photovoltaic module during power generation is greater than 0, the abnormality determination unit determines that the abnormality is present in the parallel resistance component of the determination target photovoltaic cell.

According to another aspect of the present invention, there is provided a photovoltaic module abnormality determination method for determining presence or absence of an abnormality in a parallel resistance component of each of a plurality of photovoltaic cells connected in series to constitute a photovoltaic module, the photovoltaic module abnormality determination method comprising: an output current acquisition step of acquiring an output current of the photovoltaic module during power generation; a light shielding rate acquisition step of acquiring a light shielding rate of a determination target photovoltaic cell that is a photovoltaic cell corresponding to a determination target for presence or absence of an abnormality in a parallel resistance component; and an abnormality determination step of determining that the abnormality is not present in the parallel resistance component of the determination target photovoltaic cell in a case where a light shielding rate range of output current change, which is a range of the light shielding rate of the determination target photovoltaic cell in which the output current of the photovoltaic module changes in accordance with a change in the light shielding rate of the determination target photovoltaic cell in a case where the light shielding rate of the determination target photovoltaic cell is changed, is between a light shielding rate of 0 and 1 of the determination target photovoltaic cell, and determining that the abnormality is present in the parallel resistance component of the determination target photovoltaic cell in a case where a light shielding rate range of non-output current change, which is a range of the light shielding rate of the determination target photovoltaic cell in which the output current of the photovoltaic module hardly changes even in a case where the light shielding rate of the determination target photovoltaic cell is changed, is between the light shielding rate of 0 and 1 of the determination target photovoltaic cell.

According to still another aspect of the present invention, there is provided a program causing a computer, which constitutes a photovoltaic module abnormality determination system that determines presence or absence of an abnormality in a parallel resistance component of each of a plurality of photovoltaic cells connected in series to constitute a photovoltaic module, to execute a process comprising: an output current acquisition step of acquiring an output current of the photovoltaic module during power generation; a light shielding rate acquisition step of acquiring a light shielding rate of a determination target photovoltaic cell that is a photovoltaic cell corresponding to a determination target for presence or absence of an abnormality in a parallel resistance component; and an abnormality determination step of determining that the abnormality is not present in the parallel resistance component of the determination target photovoltaic cell in a case where a light shielding rate range of output current change, which is a range of the light shielding rate of the determination target photovoltaic cell in which the output current of the photovoltaic module changes in accordance with a change in the light shielding rate of the determination target photovoltaic cell in a case where the light shielding rate of the determination target photovoltaic cell is changed, is between a light shielding rate of 0 and 1 of the determination target photovoltaic cell, and determining that the abnormality is present in the parallel resistance component of the determination target photovoltaic cell in a case where a light shielding rate range of non-output current change, which is a range of the light shielding rate of the determination target photovoltaic cell in which the output current of the photovoltaic module hardly changes even in a case where the light shielding rate of the determination target photovoltaic cell is changed, is between the light shielding rate of 0 and 1 of the determination target photovoltaic cell.

[Advantageous Effects of Invention]

According to the present invention, it is possible to provide a photovoltaic module abnormality determination system, a photovoltaic module abnormality determination method, and a program with which it is possible to determine the presence or absence of an abnormality in a parallel resistance component of each of a plurality of photovoltaic cells connected in series to constitute the photovoltaic module without using modulated light irradiation or the like.

That is, according to the present invention, it is possible to provide a photovoltaic module abnormality determination system, a photovoltaic module abnormality determination method, and a program with which it is possible to determine the presence or absence of an abnormality in a parallel resistance component of each of a plurality of photovoltaic cells connected in series to constitute the photovoltaic module using a simple method.

[Brief Description of Drawings]

FIG. 1 is a diagram showing an example or the like of an abnormality determination system 1 of a photovoltaic module M according to a first embodiment.

FIG. 2 is a diagram showing a voltage of a photovoltaic cell C1 shown in (A) of FIG. 1 as "voltage $V_1$ of cell 1" and showing voltages of photovoltaic cells C2, ..., and Cm shown in (A) of FIG. 1 as "voltage $V_2$ of cell 2".

FIG. 3 is a diagram describing a graph f.

FIG. 4 is a diagram describing a graph g.

FIG. 5 is a diagram in which the graph f shown in FIG. 3 and the graph g shown in FIG. 4 are represented on the same coordinate axis.

FIG. 6 is a diagram showing an example of a relationship between an I-V curve of the determination target photovoltaic cell C1, a combined I-V curve of the photovoltaic cells C2, ..., and Cm, and a light shielding rate r of the determination target photovoltaic cell C1 in a case where an abnormality is not present in a parallel resistance component of the determination target photovoltaic cell C1.

FIG. 7 is a diagram showing an example of the relationship between the I-V curve of the determination target photovoltaic cell C1, the combined I-V curve of the photovoltaic cells C2, ..., and Cm, and the light shielding rate r of the determination target photovoltaic cell C1 in a case where an abnormality is present in the parallel resistance component of the determination target photovoltaic cell C1.

FIG. 8 is a diagram showing a comparison between the combined I-V curve of the photovoltaic cells C2, ..., Cm in a case where a resistance value R of a load resistor RL connected to the photovoltaic module M during power generation is substantially 0 and the combined I-V curve of the photovoltaic cells C2, ..., Cm in a case where the resistance value R of the load resistor RL connected to the photovoltaic module M during power generation is greater than 0.

FIG. 9 is a diagram showing another example of the relationship between the I-V curve of the determination target photovoltaic cell C1, the combined I-V curve of the photovoltaic cells C2, ..., and Cm, and the light shielding rate r of the determination target photovoltaic cell C1 in a case where an abnormality is not present in the parallel resistance component of the determination target photovoltaic cell C1.

FIG. 10 is a diagram showing an example of the relationship between the I-V curve of the determination target photovoltaic cell C1, the combined I-V curve of the photovoltaic cells C2, ..., and Cm, and the light shielding rate r of the determination target photovoltaic cell C1 in a case where an abnormality is not present in the parallel resistance component of the determination target photovoltaic cell C1 and the resistance value R of the load resistor RL connected to the photovoltaic module M is greater than 0.

FIG. 11 is a diagram showing an example of the relationship between the I-V curve of the determination target photovoltaic cell C 1, the combined I-V curve of the photovoltaic cells C2, ..., and Cm, and the light shielding rate r of the determination target photovoltaic cell C1 in a case where an abnormality is present in the parallel resistance component of the determination target photovoltaic cell C1 and the resistance value R of the load resistor RL connected to the photovoltaic module M is greater than 0.

FIG. 12 is a flowchart for explaining an example of a process executed in the abnormality determination system 1 of the photovoltaic module M according to the first embodiment.

FIG. 13 is a diagram showing an experimental apparatus according to a first example to a fourth example.

FIG. 14 is a diagram showing an application example to a normal cell (cell 2) that shows a low voltage without light shielding.

FIG. 15 is a diagram showing an application example to a defective simulation cell that uses a cell showing a low voltage without light shielding.

FIG. 16 is a diagram showing an application example to a defective simulation cell that uses a cell showing a low voltage without light shielding.

FIG. 17 is a diagram showing an application example to a normal cell (cell 3) showing a high voltage without light shielding.

FIG. 18 is a diagram showing an application example to a defective simulation cell that uses a cell showing a high voltage without light shielding.

FIG. 19 is a diagram showing an equivalent circuit of a photovoltaic cell including a parallel resistance component $R_{sh}$.

[Description of Embodiments]

Hereinafter, embodiments of a photovoltaic module abnormality determination system, a photovoltaic module abnormality determination method, and a program according to the present invention will be described.

[First embodiment]

FIG. 1 is a diagram showing an example of an abnormality determination system 1 of a photovoltaic module M according to a first embodiment. Specifically, (A) of FIG. 1 shows the photovoltaic module M in which the presence or absence of an abnormality is determined by the abnormality determination system 1 of the photovoltaic module M according to the first embodiment, and (B) of FIG. 1 shows the abnormality determination system 1 of the photovoltaic module M according to the first embodiment.

In the example shown in FIG. 1, the photovoltaic module M is composed of a plurality of photovoltaic cells C1, ..., and Cm (m is an integer of 2 or greater) connected in series. The abnormality determination system 1 determines the presence or absence of an abnormality in a parallel resistance component of each of the plurality of photovoltaic cells C1, ..., and Cm. The photovoltaic module M is connected to a load resistor RL (specifically, a load resistor RL suitable for determination of the presence or absence of an abnormality in the parallel resistance component of the photovoltaic cells C1 to Cm).

The light shielding rate r of a determination target photovoltaic cell (in the example shown in FIG. 1, the photovoltaic cell C1), which is a photovoltaic cell that is a determination target of the presence or absence of an abnormality in the parallel resistance component in the plurality of photovoltaic cells C1, ..., Cm, is changed by a light shielding rate change unit A1. Information indicating the light shielding rate r of the determination target photovoltaic cell C1 set by the light shielding rate change unit A1 is transmitted to the abnormality determination system 1. That is, in the example shown in FIG. 1, the entirety or part of the determination target photovoltaic cell C1 is light shielded in order to determine the presence or absence of an abnormality in the parallel resistance component of the determination target photovoltaic cell C1.

Specifically, the light shielding rate change unit A1 changes the light shielding rate r for only the determination target photovoltaic cell C1 in the photovoltaic module M to an arbitrary value throughout the entire range of 0 to 1 during power generation of the photovoltaic module M (desirably, the light shielding rate r is changed evenly in the range of 0 to 1 in fine steps). The photovoltaic cells C2, ..., and Cm other than the determination target photovoltaic cell C1 in the photovoltaic module M are not light shielded.

In the example in which the determination target photovoltaic cell is the photovoltaic cell C2, the light shielding rate change unit A1 changes the light shielding rate r for only the determination target photovoltaic cell C2 in the photovoltaic module M to an arbitrary value throughout the entire range of 0 to 1 during power generation of the photovoltaic module M, and the photovoltaic cells C1, C3, ..., and Cm other than the determination target photovoltaic cell C2 in the photovoltaic module M are not light shielded.

In the example in which the determination target photovoltaic cell is the photovoltaic cell Cm, the light shielding rate change unit A1 changes the light shielding rate r for only the determination target photovoltaic cell Cm in the photovoltaic module M to an arbitrary value throughout the entire range of 0 to 1 during power generation of the photovoltaic module M, and the photovoltaic cells C1, ..., Cm-1 other than the determination target photovoltaic cell Cm in the photovoltaic module M are not light shielded.

In the example shown in FIG. 1, the output current I of the photovoltaic module M during power generation is detected by an output current detection unit A2. Information indicating the output current I of the photovoltaic module M detected by the output current detection unit A2 is transmitted to the abnormality determination system 1.

Specifically, the output current detection unit A2 measures (detects) the output current $I_r$ of the photovoltaic module M at each value of the light shielding rate r changed (set) by the light shielding rate change unit A1 during power generation of the photovoltaic module M and transmits the information indicating the output current $I_r$ of the photovoltaic module M at each value of the light shielding rate r to the abnormality determination system 1. As an example of the output current detection unit A2, it is possible to use a current clamp coil or the like.

The abnormality determination system 1 records the information indicating the light shielding rate r of the determination target photovoltaic cell C1 transmitted from the light shielding rate change unit A1, the information indicating the output current I of the photovoltaic module M transmitted from the output current detection unit A2, and the like.

In the example shown in FIG. 1, a bypass diode (refer to Non Patent Document 2) is not incorporated into the photovoltaic module M. In an example in which the bypass diode is incorporated into the photovoltaic module M, the voltage between the terminals of the bypass diode is controlled to prevent the bypass diode from becoming conductive and the current from flowing through the bypass diode.

In the example shown in FIG. 1, the operation voltage Vm of the photovoltaic module M during power generation is detected by an operation voltage detection unit A3. Information indicating the operation voltage Vm of the photovoltaic module M detected by the operation voltage detection unit A3 is transmitted to the abnormality determination system 1.

In a first example of the photovoltaic module M to which the abnormality determination system 1 of the photovoltaic module M according to the first embodiment is applied, the light shielding rate change unit A1 covers the entirety or part of the determination target photovoltaic cell C1 with, for example, a light attenuating film, a porous plate, a net, or the like, or changes the size of a covered portion, in order to change the light shielding rate r of the determination target photovoltaic cell C1.

In a second example (an example in which the entire light receiving surface of the determination target photovoltaic cell C1 has uniform power generation performance) of the photovoltaic module M to which the abnormality determination system 1 of the first embodiment is applied, the light shielding rate change unit A1 covers part of the determination target photovoltaic cell C1 with a complete light shielding body such as an aluminum tape corresponding to the relative area of the light shielding rate r of the determination target photovoltaic cell C1, or changes the size of the covered portion, in order to change the light shielding rate r of the determination target photovoltaic cell C1.

In a third example of the photovoltaic module M to which the abnormality determination system 1 of the photovoltaic module M according to the first embodiment is applied, a structure that does not adhere to the determination target photovoltaic cell C1 but has a dimension equal to or less than the dimension of the determination target photovoltaic cell C1 and that does not transmit or reduces the solar light is used, in order to shield the determination target photovoltaic cell C1. The structure may act on the photovoltaic module M (for example, cleaning or inspecting the light receiving surface of the photovoltaic module M) in some way other than a light shielding.

In a fourth example of the photovoltaic module M to which the abnormality determination system 1 of the photovoltaic module M according to the first embodiment is applied, a person in charge of determining an abnormality of the photovoltaic module M may change (set) the light shielding rate r of the determination target photovoltaic cell C1, and may transmit the information indicating the light shielding rate r of the determination target photovoltaic cell C1 to the abnormality determination system 1. That is, the light shielding rate change unit A1 (that is, an apparatus that changes the light shielding rate r of the determination target photovoltaic cell C1) doesn't have to be provided.

In the example shown in FIG. 1, the abnormality determination system 1 includes an output current acquisition unit 1A, a light shielding rate acquisition unit 1B, an abnormality determination unit 1C, an operation voltage acquisition unit 1D, a resistance value acquisition unit 1E, and a parallel resistance component calculation unit 1F.

The output current acquisition unit 1A acquires the output current I of the photovoltaic module M during power generation. Specifically, the output current acquisition unit 1A acquires information indicating the output current I of the photovoltaic module M during power generation, which is detected by the output current detection unit A2.

The light shielding rate acquisition unit 1B acquires the light shielding rate r of the determination target photovoltaic cell C1 which is the photovoltaic cell that is a determination target of the presence or absence of an abnormality in the parallel resistance component. In the example shown in (A) of FIG. 1, the light shielding rate acquisition unit 1B acquires the information indicating the light shielding rate r of the determination target photovoltaic cell C1, which is set by the light shielding rate change unit A1. In another example, the light shielding rate acquisition unit 1B may acquire information indicating the light shielding rate r of the determination target photovoltaic cell C1, which is set by, for example, a person in charge of determining an abnormality of the photovoltaic module M.

In an example in which the determination target photovoltaic cell is the photovoltaic cell C2, the light shielding rate acquisition unit 1B acquires the light shielding rate r of the determination target photovoltaic cell C2. In an example in which the determination target photovoltaic cell is the photovoltaic cell Cm, the light shielding rate acquisition unit 1B acquires the light shielding rate r of the determination target photovoltaic cell Cm.

In the example shown in FIG. 1, the operation voltage acquisition unit 1D acquires the operation voltage Vm of the photovoltaic module M during power generation. Specifically, the operation voltage acquisition unit 1D acquires information indicating the operation voltage Vm of the photovoltaic module M during power generation, which is detected by the operation voltage detection unit A3.

The resistance value acquisition unit 1E acquires the resistance value R of the load resistor RL connected to the photovoltaic module M. Specifically, the resistance value acquisition unit 1E acquires information indicating the resistance value R of the load resistor RL set by, for example, a person in charge of determining an abnormality of the photovoltaic module M.

In the example shown in FIG. 1, the abnormality determination unit 1C determines the presence or absence of an abnormality in the parallel resistance component of the determination target photovoltaic cell C1.

In the example in which the determination target photovoltaic cell is the photovoltaic cell C2, the abnormality determination unit 1C determines the presence or absence of an abnormality in the parallel resistance component of the determination target photovoltaic cell C2. In the example in which the determination target photovoltaic cell is the photovoltaic cell Cm, the abnormality determination unit 1C determines the presence or absence of an abnormality in the parallel resistance component of the determination target photovoltaic cell Cm.

FIGS. 2 to 5 are diagrams for explaining a concept used in the abnormality determination system 1 of the photovoltaic module M according to the first embodiment.

Specifically, FIG. 2 is a diagram showing a voltage of the photovoltaic cell C1 shown in (A) of FIG. 1 as "voltage $V_1$ of cell 1", and showing total voltage of the photovoltaic cells C2, ..., and Cm shown in (A) of FIG. 1 as "voltage $V_2$ of cell 2". In FIG. 2, "cell 1" corresponds to the photovoltaic cell C1 (determination target photovoltaic cell C1) shown in (A) of FIG. 1, and "cell 2" corresponds to the synthesized cell of photovoltaic cells C2, ..., and Cm (photovoltaic cells C2, ..., and Cm other than the determination target photovoltaic cell C1) shown in (A) of FIG. 1. "Current I" corresponds to the output current I of the photovoltaic module M during power generation, which is shown in (A) of FIG. 1, and "module voltage Vm" corresponds to the operation voltage Vm of the photovoltaic module M during power generation, which is shown in (A) of FIG. 1. As described above, "voltage $V_1$ of cell 1" corresponds to the voltage of the determination target photovoltaic cell C1 shown in (A) of FIG. 1, and "voltage $V_2$ of cell 2" corresponds to the total voltage of the combined cell of the photovoltaic cells C2, ..., and Cm shown in (A) of FIG. 1.

The voltage of the determination target photovoltaic cell C1 corresponding to "voltage $V_1$ of cell 1", the voltages of the combined cell of the photovoltaic cells C2, ..., and Cm corresponding to "voltage $V_2$ of cell 2", and the output current I of the photovoltaic module M during power generation corresponding to "current I" are obtained by solving simultaneous equations shown in the following Equation (1-1), Equation (1-2), and Equation (1-3).

[Equation 1]

$$I = f(V_1) \quad (1\text{-}1)$$

$$I = g(V_2) \quad (1\text{-}2)$$

$$V_2 = V_m - V_1 \quad (1\text{-}3)$$

By eliminating "voltage $V_2$ of cell 2" in the simultaneous equations shown in Equation (1-1), Equation (1-2), and Equation (1-3), the following Equation (2-1) and Equation (2-2) are obtained.

[Equation 2]

$$I = f(V_1) \quad (2\text{-}1)$$

$$I = g(V_m - V_1) \quad (2\text{-}2)$$

The voltage of the determination target photovoltaic cell C1 corresponding to "voltage $V_1$ of cell 1" and the output current I of the photovoltaic module M during power generation corresponding to "current I" are obtained by solving the Equation (2-1) and Equation (2-2). Specifically, the intersection between the graph f and the graph g, which are drawn on a coordinate plane having "voltage $V_1$ of cell 1" as the horizontal axis and "current I" as the vertical axis, indicates the voltage of the determination target photovoltaic cell C1 corresponding to "voltage $V_1$ of cell 1" and the output current I of the photovoltaic module M during power generation corresponding to "current I".

FIG. 3 is a diagram for describing the graph f. Specifically, FIG. 3 is a diagram showing the graph f showing a relationship between a voltage (horizontal axis) of the determination target photovoltaic cell C1 corresponding to "voltage $V_1$ of cell 1" and an output current I (vertical axis) of the photovoltaic module M during power generation corresponding to "current I". The graph f shown in FIG. 3 represents the relationship I = f(Vi) between "voltage $V_1$ of cell 1" and "current I" shown in Equation (2-1).

FIG. 4 is a diagram for explaining the graph g. Specifically, FIG. 4 is a diagram showing the graph g showing a relationship between a total voltage (horizontal axis) of the respective voltages of the photovoltaic cells C2, ..., and Cm corresponding to "voltage $V_2$ of photovoltaic cell C2" and an output current I (vertical axis) of the photovoltaic module M during power generation corresponding to "current I". The graph g shown in FIG. 4 represents a relationship $I = g(V_2)$ between "voltage $V_2$ of cell 2" and "current I" shown in Equation (1-2).

In order to represent the graph f shown in FIG. 3 and the graph g shown in FIG. 4 on the same coordinate axis, the graph g represented as a function of $V_2$ is necessary to be represented as a function of $V_1$. That is, it is necessary to eliminate $V_2$ and perform conversion into $V_1$.

In FIG. 4, "short-circuit current Isc of cell 2" is a value ($g(V_2 = 0)$ on the vertical axis of the graph g in a case where $V_2 = 0$. In a case where $V_2 = 0$, $0 = Vm - V_1$ and $V_1 = Vm$.

"Open-circuit voltage Voc of cell 2" is a value on the horizontal axis of the graph g in a case where I = 0. In a case where I = 0, $V_2 = V_{OC}$, $V_{OC} = Vm - V_1$, and $V_1 = Vm - V_{OC}$.

FIG. 5 is a diagram in which the graph f shown in FIG. 3 and the graph g shown in FIG. 4 are represented on the same coordinate axis.

As shown in FIG. 5, the graph f shown in FIG. 3 is represented as it is on the coordinate axis of FIG. 5. Since the horizontal axis of the coordinate axis of FIG. 5 is "voltage $V_1$ of cell 1", the graph g shown in FIG. 4 is represented by being reversed left and right on the coordinate axis of FIG. 5. The reason for this is that a negative sign is added to "Vi" in the equation of "I = g(Vm - Vi)" representing the graph g.

In the coordinate axis of FIG. 5, the "open-circuit voltage Voc of cell 2" (value on the horizontal axis of the graph g in a case where I = 0) (intersection between the graph g and the horizontal axis) is "Vi = Vm - Voc".

"Short-circuit current Isc of cell 2" (the value on the vertical axis of the graph g in a case where $V_2 = 0$) is a value on the vertical axis of the graph g in a case where "Vi = Vm" on the coordinate axis of FIG. 5.

"Voltage $V_1$ of cell 1" and "current I" (common current of the cell 1 and the cell 2) are obtained from the Equation (2-1) and Equation (2-2) and are represented by the intersection between the right-descending graph f and the right-ascending graph g on the coordinate axis (horizontal axis $V_1$, vertical axis I) of FIG. 5.

In the abnormality determination system 1 of the photovoltaic module M according to the first embodiment, the concept shown in FIG. 5 is applied. The I-V curve of the determination target photovoltaic cell C1 corresponds to the right-descending graph f which is shown in FIG. 5. The combined I-V curve of the photovoltaic cells C2, ..., and Cm in the photovoltaic module M correspond to the right-ascending graph g shown in FIG. 5. The voltage of the determination target photovoltaic cell C1 and the output current I of the photovoltaic module M are represented by the value on the horizontal axis and the value on the vertical axis of the intersection between the I-V curve of the determination target photovoltaic cell C1 corresponding to the right-descending graph f and the combined I-V curve of the photovoltaic cells C2, ..., Cm corresponding to the right-ascending graph g.

FIG. 6 is a diagram showing an example of a relationship between an I-V curve of the determination target photovoltaic cell C1, a combined I-V curve of the photovoltaic cells C2, ..., and Cm, and the light shielding rate r of the determination target photovoltaic cell C1 in a case where an abnormality is not present in the parallel resistance component of the determination target photovoltaic cell C1. Specifically, FIG. 6 schematically shows the I-V curve of the determination target photovoltaic cell C1 and the combined I-V curve of the photovoltaic cells C2, ..., and Cm at each of the light shielding rates r = 0, 0.05, 0.25, 0.5, 0.87, and 1, which are measured by a known method described in, for example, the web sites indicated by the following URLs.

http://solar-support.co.jp/i-v.html
https://eko.co.jp/applications/ap_fields/solar_power_wind/a0007.html
https://blog.nttrec.co.jp/i-v-curve-string-tracer/#2-1
https://www.adcmt.com/download/application/solar_iv

As described with reference to FIGS. 2 to 5, the output current I of the photovoltaic module M is represented by the value on the vertical axis of the intersection between the I-V curve of the determination target photovoltaic cell C1 corresponding to the right-descending graph f and the combined I-V curve of the photovoltaic cells C2, ..., and Cm corresponding to the right-ascending graph g.

In the example shown in FIG. 6 (that is, the example in which an abnormality is not present in the parallel resistance component of the determination target photovoltaic cell C1), in a case where the light shielding rate r of the determination target photovoltaic cell C1 is changed in a range of 0.05 to 1, the output current I of the photovoltaic module M is changed in accordance with the change in the light shielding rate r of the determination target photovoltaic cell C1. Specifically, in a case where the light shielding rate r of the determination target photovoltaic cell C1 is increased from 0.05 to 0.25, the output current I of the photovoltaic module M is decreased in accordance with the increase in the light shielding rate r of the determination target photovoltaic cell C1. In a case where the light shielding rate r of the determination target photovoltaic cell C1 is further increased from 0.25 to 0.5, the output current I of the photovoltaic module M is further decreased in accordance with the increase in the light shielding rate r of the determination target photovoltaic cell C1. In a case where the light shielding rate r of the determination target photovoltaic cell C1 is further increased from 0.5 to 0.87, the output current I of the photovoltaic module M is further decreased in accordance with the increase in the light shielding rate r of the determination target photovoltaic cell C1. In a case where the light shielding rate r of the determination target photovoltaic cell C1 is further increased from 0.87 to 1, the output current I of the photovoltaic module M is further decreased in accordance with the increase in the light shielding rate r of the determination target photovoltaic cell C1.

The abnormality determination unit 1C of the abnormality determination system 1 of the photovoltaic module M according to the first embodiment uses the above property and determines that an abnormality is not present in the parallel resistance component of the determination target photovoltaic cell C1.

Specifically, in the first example of the abnormality determination system 1 of the photovoltaic module M according to the first embodiment, the light shielding rate range of the output current change, which is a range of the light shielding rate r of the determination target photovoltaic cell C1 in which the output current I of the photovoltaic module M is changed in accordance with the change in the light shielding rate r of the determination target photovoltaic cell C1 in a case where the light shielding rate r of the determination target photovoltaic cell C1 is changed, is set to the range of the light shielding rate r of 0.5 to 1. In a case where the light shielding rate range of the output current change (the light shielding rate r is 0.5 to 1) of the determination target photovoltaic cell C1 is between 0 and 1, the abnormality determination unit 1C determines that an abnormality is not present in the parallel resistance component of the determination target photovoltaic cell C1.

In the example shown in FIG. 6 (that is, the example in which an abnormality in the parallel resistance component of the determination target photovoltaic cell C1 shown in FIG. 6 is determined), in a case where the light shielding rate r of the determination target photovoltaic cell C1 is increased from 0.5 to 1, the output current I of the photovoltaic module M is decreased in accordance with the increase in the light shielding rate r of the determination target photovoltaic cell C1. Therefore, the abnormality determination unit 1C determines that the light shielding rate range of the output current change (the range in which the light shielding rate r is 0.5 to 1) of the determination target photovoltaic cell C1 is between 0 and 1 and determines that an abnormality is not present in the parallel resistance component of the determination target photovoltaic cell C1.

Therefore, in the abnormality determination system 1 of the photovoltaic module M according to the first embodiment, it is possible to determine that an abnormality is not present in the parallel resistance component of the determination target photovoltaic cell C1 by confirming whether or not the output current I of the photovoltaic module M is changed in accordance with the change in the light shielding rate r of the determination target photovoltaic cell C1 in a case where the light shielding rate r of the determination target photovoltaic cell C1 is changed.

That is, in the abnormality determination system 1 of the photovoltaic module M according to the first embodiment, it is possible to determine that an abnormality is not present in the parallel resistance component of the determination target photovoltaic cell C1 using a simple method without using the modulated light irradiation or the like.

In another example of the abnormality determination system 1 of the photovoltaic module M according to the first embodiment, the light shielding rate range of the output current change may be set to a range of the light shielding rate r (for example, a range in which the light shielding rate r is 0.3 to 1, or the like) which is different from 0.5 to 1.

FIG. 7 is a diagram showing an example of a relationship between the I-V curve of the determination target photovoltaic cell C1, the combined I-V curve of the photovoltaic cells C2, ..., and Cm, and the light shielding rate r of the determination target photovoltaic cell C1 in a case where an abnormality is present in the parallel resistance component of the determination target photovoltaic cell C1. Specifically, FIG. 7 schematically shows the I-V curve of the determination target photovoltaic cell C1 and the combined I-V curve of the photovoltaic cells C2, ..., and Cm at each of the light shielding rates r = 0, 0.49, 0.82, and 1 which are measured by a well-known method described on the website indicated by the URL described above.

As described above, the output current I of the photovoltaic module M is represented by the value on the vertical axis of the intersection between the I-V curve of the determination target photovoltaic cell C1 corresponding to the right-descending graph f and the combined I-V curve of the photovoltaic cells C2, ..., and Cm corresponding to the right-ascending graph g.

In the example shown in FIG. 7 (that is, the example in which an abnormality is present in the parallel resistance component of the determination target photovoltaic cell C1), the output current I of the photovoltaic module M is hardly changed even in a case where the light shielding rate r of the determination target photovoltaic cell C1 is changed in a range of 0 to 0.82.

The abnormality determination unit 1C of the abnormality determination system 1 of the photovoltaic module M according to the first embodiment uses the above property and determines that an abnormality is present in the parallel resistance component of the determination target photovoltaic cell C1.

Specifically, in the first example of the abnormality determination system 1 of the photovoltaic module M according to the first embodiment, the light shielding rate range of the non-output current change, which is the range of the light shielding rate r of the determination target photovoltaic cell C1 where the output current I of the photovoltaic module M is hardly changed even in a case where the light shielding rate r of the determination target photovoltaic cell C1 is changed, is set to 0 to 0.5. In a case where the light shielding rate range of the non-output current change of the determination target photovoltaic cell C1 (the light shielding rate r is in the range of 0 to 0.5) is between the light shielding rate of 0 and 1, the abnormality determination unit 1C determines that the abnormality is present in the parallel resistance component of the determination target photovoltaic cell C1.

In the example shown in FIG. 7, the output current I of the photovoltaic module M is hardly changed even in a case where the light shielding rate r of the determination target photovoltaic cell C1 is increased from 0 to 0.5. Therefore, the abnormality determination unit 1C determines that the light shielding rate range of the non-output current change (the light shielding rate r is in the range of 0 to 0.5) is between the light shielding rate of 0 and 1 of the determination target photovoltaic cell C1 and determines that an abnormality is present in the parallel resistance component of the determination target photovoltaic cell C1.

In the second example of the abnormality determination system 1 of the photovoltaic module M according to the first embodiment, the abnormality determination unit 1C determines that an abnormality is present in the parallel resistance component of the determination target photovoltaic cell C1 when the light shielding rate range of the non-output current change (the light shielding rate r is in the range of 0 to 0.5) is between the light shielding rate of 0 and 1 of the determination target photovoltaic cell C1, the light shielding rate range of the non-output current change (the light shielding rate r is in the range of 0 to 0.5) is in a range in which the light shielding rate r of the determination target photovoltaic cell C1 is equal to or less than a first threshold value (for example, "0.9" or the like), and the output current I of the photovoltaic module M is changed in accordance with the change in the light shielding rate r of the determination target photovoltaic cell C1 in a case where the light shielding rate r of the determination target photovoltaic cell C1 is changed in a range (that is, the light shielding rate r is in the range of 0.9 to 1) in which the light shielding rate r of the determination target photovoltaic cell C1 is greater than the first threshold value ("0.9").

In the example shown in FIG. 7 (that is, the example in which an abnormality in the parallel resistance component of the determination target photovoltaic cell C1 shown in FIG. 7 is determined), the output current I of the photovoltaic module M is hardly changed even in a case where the light shielding rate r of the determination target photovoltaic cell C1 is increased from 0 to 0.5. Therefore, the abnormality determination unit 1C determines that the light shielding rate range of the non-output current change (the light shielding rate r is in the range of 0 to 0.5) is between the light shielding rate of 0 and 1 of the determination target photovoltaic cell C1. Further, the abnormality determination unit 1C determines that the output current I of the photovoltaic module M is decreased in accordance with an increase in the light shielding rate r of the determination target photovoltaic cell C1 in a case where the light shielding rate r of the determination target photovoltaic cell C1 is increased from 0.9 to 1 in a range which is greater than the first threshold value ("0.9"). As a result, the abnormality determination unit 1C determines that an abnormality is present in the parallel resistance component of the determination target photovoltaic cell C1.

As described above, in the abnormality determination system 1 of the photovoltaic module M according to the first embodiment (the first example and the second example), it is possible to determine that an abnormality is present in the parallel resistance component of the determination target photovoltaic cell C1 by confirming whether or not the output current I of the photovoltaic module M is changed even in a case where the light shielding rate r of the determination target photovoltaic cell C1 is changed.

That is, in the abnormality determination system 1 of the photovoltaic module M according to the first embodiment (first example and second example), it is possible to determine that an abnormality is present in the parallel resistance component of the determination target photovoltaic cell C1 using a simple method without using the modulated light irradiation or the like.

In another example of the abnormality determination system 1 of the photovoltaic module M according to the first embodiment, the light shielding rate range of the output current change may be set to a range of the light shielding rate r which is different from 0 to 0.5 (for example, the light shielding rate r is in the range of 0 to 0.7 or the like) or the first threshold value may be set to a value of the light shielding rate r which is different from 0.9 (for example, "0.8" or the like).

As shown in FIG. 6, in a case where an abnormality is not present in the parallel resistance component of the determination target photovoltaic cell C1, the slope of the portion which is close to the horizontal, of the I-V curve of the determination target photovoltaic cell C1 is substantially 0. In contrast, as shown in FIG. 7, in a case where an abnormality is present in the parallel resistance component of the determination target photovoltaic cell C1, (the absolute value) of the slope of the portion, in which a value on the horizontal axis is negative, of the I-V curve of the determination target photovoltaic cell C1 is greater than 0.

The abnormality determination unit 1C of the abnormality determination system 1 of the photovoltaic module M according to the first embodiment uses the above property and estimates the I-V curve of the determination target photovoltaic cell C 1.

In the example shown in FIG. 1, the abnormality determination unit 1C includes an I-V curve estimation unit 1C1. The I-V curve estimation unit 1C1 estimates the I-V curve of each of the plurality of photovoltaic cells C1, ..., and Cm. Specifically, in a case where the photovoltaic cell C1 is the determination target photovoltaic cell, the I-V curve estimation unit 1C1 estimates the I-V curve of the determination target photovoltaic cell C1 based on the output current I of the photovoltaic module M during power generation, which is acquired by the output current acquisition unit 1A, the light shielding rate r of the determination target photovoltaic cell C1, which is acquired by the light shielding rate acquisition unit 1B, and the combined I-V curve of the photovoltaic cells C2, ..., and Cm in the photovoltaic module M.

Specifically, in a case where the output current I of the photovoltaic module M is changed in accordance with the change in the light shielding rate r of the determination target photovoltaic cell C1 in a case where the light shielding rate r of the determination target photovoltaic cell C1 is changed in the light shielding rate range of the output current change (a range in which the light shielding rate r is 0.5 to 1), the I-V curve estimation unit 1C1 estimates, as the I-V curve of the determination target photovoltaic cell C1, the I-V curve of the determination target photovoltaic cell C1 (the I-V curve of the determination target photovoltaic cell C1 in which the slope of the portion, in which a value on the horizontal axis is negative, is substantially 0) as shown in FIG. 6. The abnormality determination unit 1C determines that an abnormality is not present in the parallel resistance component of the determination target photovoltaic cell C1 based on the I-V curve of the determination target photovoltaic cell C1 estimated by the I-V curve estimation unit 1C1.

In a case where the output current I of the photovoltaic module M is hardly changed even in a case where the light shielding rate r of the determination target photovoltaic cell C1 is changed in the light shielding rate range of the non-output current change (the light shielding rate r is in the range of 0 to 0.5), the I-V curve estimation unit 1C1 estimates, as the I-V curve of the determination target photovoltaic cell C1, the I-V curve of the determination target photovoltaic cell C1 (the I-V curve of the determination target photovoltaic cell C1 in which the absolute value of the slope of the portion, in which a value on the horizontal axis is negative, is greater than 0) as shown in FIG. 7. The abnormality determination unit 1C determines that an abnormality is present in the parallel resistance component of the determination target photovoltaic cell C1 based on the I-V curve of the determination target photovoltaic cell C1 estimated by the I-V curve estimation unit 1C1.

In intensive studies, the present inventor has found that the shape of the combined I-V curve of the photovoltaic cells C2, ..., and Cm in a case where the resistance value R of the load resistor RL connected to the photovoltaic module M during power generation is substantially 0 is different from the shape of the combined I-V curve of the photovoltaic cells C2, ..., and Cm in a case where the resistance value R of the load resistor RL connected to the photovoltaic module M during power generation is greater than 0.

FIG. 8 is a diagram showing a comparison between the combined I-V curve of the photovoltaic cells C2, ..., Cm in a case where the resistance value R of the load resistor RL connected to the photovoltaic module M during power generation is substantially 0 and the combined I-V curve of the photovoltaic cells C2, ..., Cm in a case where the resistance value R of the load resistor RL connected to the photovoltaic module M during power generation is greater than 0. Specifically, (A) of FIG. 8 shows the combined I-V curve of the photovoltaic cells C2, ..., and Cm in a case where the resistance value R of the load resistor RL connected to the photovoltaic module M during power generation is substantially 0, and (B) of FIG. 8 shows the combined I-V curve of the photovoltaic cells C2, ..., and Cm in a case where the resistance value R of the load resistor RL connected to the photovoltaic module M during power generation is greater than 0.

In a case shown in (A) of FIG. 8 (that is, in a case where the resistance value R of the load resistor RL connected to the photovoltaic module M during power generation is substantially 0), it is possible to ignore the change in the operation voltage Vm = R I of the photovoltaic module M, and the photovoltaic module M operates in a state which is close to a short-circuit.

In a case shown in (B) of FIG. 8 (that is, in a case where the resistance value R of the load resistor RL connected to the photovoltaic module M during power generation is greater than 0), it is not possible to ignore the change in the operation voltage Vm = R I of the photovoltaic module M, and the combined I-V curve of the photovoltaic cells C2, ..., Cm moves to a positive voltage side (right side of (B) of FIG. 8) by the operation voltage Vm = R·I of the photovoltaic module M in accordance with the increase in the output current I of the photovoltaic module M.

In view of the above, in the example shown in FIG. 1, the shape of the combined I-V curve of the photovoltaic cells C2, ..., and Cm used by the I-V curve estimation unit 1C1 to estimate the I-V curve of the determination target photovoltaic cell C1 is different according to the case in which the resistance value R of the load resistor RL connected to the photovoltaic module M during power generation is substantially 0 (the case shown in (A) of FIG. 8) and the case in which the resistance value R of the load resistor RL connected to the photovoltaic module M during power generation is greater than 0 (the case shown in (B) of FIG. 8).

In the example shown in FIG. 1, the parallel resistance component calculation unit 1F calculates the value of the parallel resistance component of the determination target photovoltaic cell C1 which is determined that an abnormality is present by the abnormality determination unit 1C.

Specifically, in a case where the resistance value R of the load resistor RL connected to the photovoltaic module M during power generation is substantially 0 (in the case shown in (A) of FIG. 8), the parallel resistance component calculation unit 1F calculates the value $(Vm - (m - 1)v_{oc})/(r_{ex} \cdot I_{r=0})$ of the parallel resistance component of the determination target photovoltaic cell C1 which is determined that an abnormality is present by the abnormality determination unit 1C based on the operation voltage Vm of the photovoltaic module M acquired by the operation voltage acquisition unit 1D, the value "$-(m - 1)v_{oc}$" of the V axis (horizontal axis) at the intersection between the combined I-V curve and the V axis (horizontal axis) which are shown in (A) of FIG. 8, the value "$I_{r=0}$" (see FIG. 7) of the I axis (vertical axis) at the intersection between the combined I-V curve and the I axis (vertical axis) which are shown in (A) of FIG. 8, and the value "$r_{ex}$" (in the example shown in FIG. 7, $r_{ex} = 0.82$) of the light shielding rate r of the determination target photovoltaic cell C1 at which the output current I of the photovoltaic module M decreases from the value "$I_{r=0}$" of the I axis (vertical axis) in a case where the light shielding rate r of the determination target photovoltaic cell C1 is increased. In the case where the resistance value R of the load resistor RL connected to the photovoltaic module M during power generation is greater than 0 (the case shown in (B) of FIG. 8), the parallel resistance component calculation unit 1F calculates the value $(RI_{r=0} - (m - l)v_{oc})/(r_{ex} \cdot I_{r=0})$ of the parallel resistance component, which is determined that an abnormality is present by the abnormality determination unit 1C, of the determination target photovoltaic cell C1, based on the resistance value R of the load resistor RL acquired by the resistance value acquisition unit 1E, the value "$-(m - 1)v_{oc}$" of the V axis (horizontal axis) at the intersection between the combined I-V curve shown in (B) of FIG. 8 and the V axis (horizontal axis), the value "$I_{r=0}$" (see FIG. 11) of the I axis (vertical axis) at the intersection between the combined I-V curve shown in (B) of FIG. 8 and the I axis (vertical axis), and the value "$r_{ex}$" (in the example shown in FIG. 11, $r_{ex} = 0.68$) of the light shielding rate r of the determination target photovoltaic cell C1 at which the output current of the photovoltaic module M decreases from the value "$I_{r=0}$" of the I axis (vertical axis) in a case where the light shielding rate r of the determination target photovoltaic cell C1 is increased.

In addition, in the example shown in FIG. 1, in a case where the output current I of the photovoltaic module M is hardly decreased from the value $I_{r=0}$ (see FIG. 7) even in a case where the light shielding rate r of the determination target photovoltaic cell C1 is changed in a range of 0 to 1, the parallel resistance component calculation unit 1F considers that the parallel resistance component of the determination target photovoltaic cell C1 is smaller than the value $(Vm - (m - l)v_{oc})/(r_{ex} \cdot I_{r=0})$ described above.

In addition, in the example shown in FIG. 1, in a case where the output current $I_{r=1}$ of the photovoltaic module M during power generation is greater than 0 in a case where the light shielding rate r of the determination target photovoltaic cell C1 is 1, the abnormality determination unit 1C determines that an abnormality is present in the parallel resistance component of the determination target photovoltaic cell C1.

On the other hand, in a case where the output current $I_{r=1}$ of the photovoltaic module M during power generation is substantially 0 in a case where the light shielding rate r of the determination target photovoltaic cell C1 is 1, the abnormality determination unit 1C determines that an abnormality is not present in the parallel resistance component of the determination target photovoltaic cell C 1.

As described above, in the abnormality determination system 1 of the photovoltaic module M according to the first embodiment estimates the parallel resistance component of the determination target photovoltaic cell C1 using a phenomenon, in which the output current I of the photovoltaic module M obtained in a case where the light transmittance (1 - light shielding rate r) of the photovoltaic cells C2, ..., and Cm in the photovoltaic module M is held at 100% is changed in accordance with the value of the parallel resistance component of the determination target photovoltaic cell C1 while applying a mask or the like of the various light transmittances r only to the determination target photovoltaic cell C1 in the photovoltaic module M.

A new point of the abnormality determination system 1 of the photovoltaic module M according to the first embodiment is a point of measuring the output current I of the photovoltaic module M under the condition of various light shielding rates r using partial light shielding by various mask attachment (that is, by changing the light shielding rate r of the determination target photovoltaic cell C1) or the like with respect to only the determination target photovoltaic cell C1.That is, in the abnormality determination system 1 of the photovoltaic module M according to the first embodiment, the modulated light irradiation, a lock-in amplifier, or partial brightening irradiation are not used at all.

As shown in FIG. 6, in a case where the light shielding rate r of the determination target photovoltaic cell C1 in which an abnormality is not present in the parallel resistance component is increased, the short-circuit current Isc of the determination target photovoltaic cell C1 is decreased in accordance with the increase in the light shielding rate r, and the I-V curve of the determination target photovoltaic cell C1 is parallelly moved in the negative direction of the vertical axis. The parallel resistance component of the determination target photovoltaic cell C1 is represented by the slope of the approximately horizontal portion at a low voltage, of the I-V curve of the determination target photovoltaic cell C1. For simplicity, it is assumed that the open-circuit voltage Voc of each of the photovoltaic cells C1, ..., and Cm is the same. In addition, in practical photovoltaic modules, the short-circuit current of each of the photovoltaic cells is designed to be the same. Therefore, it is reasonable to assume that the short-circuit current Isc of each of the photovoltaic cells C1, ..., and Cm of the photovoltaic module M is the same.

The photovoltaic cells C2, ..., and Cm other than the determination target photovoltaic cell C1 in the photovoltaic module M include many normal photovoltaic cells.

Therefore, as shown in FIG. 6, it is possible to consider that the slope of the approximately horizontal portion of the combined I-V curve of the photovoltaic cells C2, ..., and Cm is substantially 0, and it is possible to represent the value of the horizontal axis of the intersection between the combined I-V curve of the photovoltaic cells C2, ..., and Cm and the horizontal axis as "Vm - (m - 1)voc". The operation voltage vi of the determination target photovoltaic cell C1 is represented by a value on the horizontal axis of the intersection between the I-V curve of the determination target photovoltaic cell C1 and the combined I-V curve of the photovoltaic cells C2, ..., and Cm.

In addition, as shown in FIG. 6, it is possible to consider the slope of the approximately horizontal portion of the I-V curve of the determination target photovoltaic cell C1 in which the abnormality is not present in the parallel resistance component is substantially 0.

As shown in FIG. 6, in a case where the light shielding rate r of the determination target photovoltaic cell C1 is increased, the short-circuit current Isc of the determination target photovoltaic cell C1 is decreased in accordance with the increase in the light shielding rate r of the determination target photovoltaic cell C 1, and the position of the intersection between the I-V curve of the determination target photovoltaic cell C1 and the combined I-V curve of the photovoltaic cells C2, ..., and Cm is changed.

Specifically, the operation voltage vi of the determination target photovoltaic cell C1 is rapidly decreased and saturated at the vicinity of "Vm - (m - 1) $v_{OC}$" by slightly increasing the light shielding rate r of the determination target photovoltaic cell C1 from 0.

In a case where the light shielding rate r of the determination target photovoltaic cell C1 is increased, the output current I of the photovoltaic module M is decreased in accordance with the increase in the light shielding rate r of the determination target photovoltaic cell C1.

That is, in a case where an abnormality is not present in the parallel resistance component of the determination target photovoltaic cell C1 and the light shielding rate r of the determination target photovoltaic cell C1 is increased, the output current I of the photovoltaic module M is decreased in accordance with the increase in the light shielding rate r of the determination target photovoltaic cell C1, as shown in FIG. 6.

In a case where an abnormality is present in the parallel resistance component of the target determination target photovoltaic cell C1, as shown in FIG. 7, it is possible to consider that (the absolute value of) the slope of the approximately horizontal portion of the I-V curve of the determination target photovoltaic cell C1 is much greater than the slope of the approximately horizontal portion of the combined I-V curve of the photovoltaic cells C2, ..., and Cm, thereby being horizontal.

As shown in FIG. 7, in a case where the light shielding rate r of the determination target photovoltaic cell C1 in which an abnormality is present in the parallel resistance component is increased, the short-circuit current Isc of the determination target photovoltaic cell C1 is decreased in accordance with the increase in the light shielding rate r of the determination target photovoltaic cell C 1, and the position of the intersection between the I-V curve of the determination target photovoltaic cell C1 in which the abnormality is present in the parallel resistance component and the combined I-V curve of the photovoltaic cells C2, ..., and Cm is changed. Specifically, in a case where the light shielding rate r of the determination target photovoltaic cell C1 is increased, the operation voltage vi of the determination target photovoltaic cell C1 in which the abnormality is present in the parallel resistance component is decreased in accordance with the increase in the light shielding rate r of the determination target photovoltaic cell C1 and is saturated in the vicinity of "$V_m$ - (m - 1)voc" only after the light shielding rate r of the determination target photovoltaic cell C1 becomes a large value (in the example shown in FIG. 7, "0.82").

The output current I of the photovoltaic module M is substantially equal to the output current I of the photovoltaic module M in a case where the light shielding rate r of the determination target photovoltaic cell C1 is 0 even in a case where the light shielding rate r of the determination target photovoltaic cell C1 is increased. The output current I of the photovoltaic module M decreases in accordance with the increase in the light shielding rate r of the determination target photovoltaic cell C1 after the light shielding rate r of the target determination target photovoltaic cell C1 becomes a large value (in the example shown in FIG. 7, "0.82").

That is, in a case where an abnormality is present in the parallel resistance component of the determination target photovoltaic cell C1, the output current I of the photovoltaic module M is substantially constant without being decreased until the light shielding rate r of the determination target photovoltaic cell C1 becomes a large value (in the example shown in FIG. 7, "0.82") even in a case where the light shielding rate r of the determination target photovoltaic cell C1 is increased from 0, and decreases in accordance with the increase in the light shielding rate r of the determination target photovoltaic cell C1 after the light shielding rate r of the determination target photovoltaic cell C1 becomes the large value, as shown in FIG. 7.

FIG. 9 is a diagram showing another example of the relationship between the I-V curve of the determination target photovoltaic cell C1, the combined I-V curve of the photovoltaic cells C2, ..., and Cm, and the light shielding rate r of the determination target photovoltaic cell C1 in a case where an abnormality is not present in the parallel resistance component of the determination target photovoltaic cell C1. Specifically, FIG. 9 is a diagram showing a case where the assumption, in which the short-circuit current Isc of the determination target photovoltaic cell C1 of the photovoltaic module M is equal to the short-circuit current Isc of the photovoltaic cells C2, ..., Cm other than the determination target photovoltaic cell C1, is not established and the short-circuit current Isc of the determination target photovoltaic cell C1 is greater than the short-circuit current Isc of the photovoltaic cells C2, ..., Cm other than the determination target photovoltaic cell C1.

In the example shown in FIG. 9, similarly to the example shown in FIG. 7, in a case where the light shielding rate r of the determination target photovoltaic cell C1 is increased from 0 to 0.36 even though an abnormality is not present in the parallel resistance component of the determination target photovoltaic cell C1, the output current I of the photovoltaic module M is substantially equal to the output current I of the photovoltaic module M in a case where the light shielding rate r of the determination target photovoltaic cell C1 is 0 even in a case where the light shielding rate r of the determination target photovoltaic cell C1 is increased.

On the other hand, in the example shown in FIG. 9, similarly to the example shown in FIG. 6, the light shielding rate range of the output current change, which is a range of the light shielding rate r of the determination target photovoltaic cell C1 in which the output current I of the photovoltaic module M is changed in accordance with the change in the light shielding rate r of the determination target photovoltaic cell C1 in a case where the light shielding rate r of the determination target photovoltaic cell C1 is changed, is set to the range of the light shielding rate r of 0.5 to 1.

In the example shown in FIG. 9, in a case where the light shielding rate r of the determination target photovoltaic cell C1 is increased from 0.5 to 1, the output current I of the photovoltaic module M is decreased in accordance with the increase in the light shielding rate r of the determination target photovoltaic cell C1. Therefore, the abnormality determination unit 1C determines that the light shielding rate range of the output current change of the determination target photovoltaic cell C1 (the range in which the light shielding rate r is 0.5 to 1) is between 0 and 1 and determines that an abnormality is not present in the parallel resistance component of the determination target photovoltaic cell C1.

Unlike the example shown in FIG. 9, the short-circuit current Isc of the determination target photovoltaic cell C1 may be lower than the short-circuit current Isc of the photovoltaic cells C2, ..., and Cm. In that case as well, the light shielding rate range of the output current change, which is a range of the light shielding rate r of the determination target photovoltaic cell C1 in which the output current I of the photovoltaic module M is changed in accordance with the change in the light shielding rate r of the determination target photovoltaic cell C1 in a case where the light shielding rate r of the determination target photovoltaic cell C1 is changed, is set to 0.5 to 1.

Even in this case, similarly to the example shown in FIG. 6, in a case where the light shielding rate r of the determination target photovoltaic cell C1 is increased from 0.5 to 1, the output current I of the photovoltaic module M is decreased in accordance with the increase in the light shielding rate r of the determination target photovoltaic cell C1. Therefore, the abnormality determination unit 1C determines that the light shielding rate range of the output current change (the range in which the light shielding rate r is 0.5 to 1) is between the light shielding rate of 0 and 1 of the determination target photovoltaic cell C1 and determines that an abnormality is not present in the parallel resistance component of the determination target photovoltaic cell C1.

In an example in which an abnormality is present in the parallel resistance component of the determination target photovoltaic cell C1 and the short-circuit current Isc of the determination target photovoltaic cell C1 is greater than the short-circuit current Isc of the photovoltaic cells C2, ..., and Cm, the light shielding rate range of the non-output current change which is the range of the light shielding rate r of the determination target photovoltaic cell C1, in which the output current I of the photovoltaic module M is hardly changed even in a case where the light shielding rate r of the determination target photovoltaic cell C1 is changed, is set to the range of the light shielding rate r of 0 to 0.5, similarly to the example shown in FIG. 7.

In the example as well, similarly to the example shown in FIG. 7, the output current I of the photovoltaic module M is hardly changed even in a case where the light shielding rate r of the determination target photovoltaic cell C1 is increased from 0 to 0.5. Therefore, the abnormality determination unit 1C determines that the light shielding rate range of the non-output current change (the light shielding rate r is in the range of 0 to 0.5) is between the light shielding rate of 0 and 1 of the determination target photovoltaic cell C1, and determines that an abnormality is present in the parallel resistance component of the determination target photovoltaic cell C1.

On the other hand, in an example in which an abnormality is present in the parallel resistance component of the determination target photovoltaic cell C1 and the short-circuit current Isc of the determination target photovoltaic cell C1 is lower than the short-circuit current Isc of the photovoltaic cells C2, ..., Cm other than the determination target photovoltaic cell C1, there is a case where the output current I of the photovoltaic module M is decreased in a case where the light shielding rate r of the determination target photovoltaic cell C1 is increased from 0 to 0.5. Therefore, in addition to the determination of the presence or absence of an abnormality in the parallel resistance component of the determination target photovoltaic cell C1 by the abnormality determination unit 1C, it is necessary to perform determination of the presence or absence of an abnormality in the parallel resistance component of the determination target photovoltaic cell C1 by using a thermographic camera or the like.

In an example of the photovoltaic module M, on which the determination of the presence or absence of an abnormality is performed by the abnormality determination system 1 of the photovoltaic module M according to the first embodiment, in a case where the abnormality determination system 1 determines the presence or absence of an abnormality in the parallel resistance component of the determination target photovoltaic cell C1, the light shielding rate change unit A1 sets the light shielding rate r of the determination target photovoltaic cell C1 to 0, and the photovoltaic module M generates power at the operation voltage Vm. The output current detection unit A2 detects the output current $I_{r=0}$ of the photovoltaic module M at this time. Since the output current I of the photovoltaic module M is decreased in a case where the light shielding rate change unit A1 increases the light shielding rate r of the determination target photovoltaic cell C1 from 0, a constant voltage source (not shown) at a voltage equal to the operation voltage Vm of the photovoltaic module M in a case where the light shielding rate r of the determination target photovoltaic cell C1 is 0 is connected to the photovoltaic module M.

In the example shown in FIG. 1, the load resistor RL is connected to the photovoltaic module M instead of the constant voltage source. As described above, in the case shown in (A) of FIG. 8, the load resistor RL having the resistance value R that is substantially 0 is connected to the photovoltaic module M during power generation, it is possible to ignore the change in the operation voltage Vm = R I of the photovoltaic module M, and the photovoltaic module M operates in a state close to the short-circuit.

As described above, in a case where the resistance value R of the load resistor RL connected to the photovoltaic module M during power generation is greater than 0 (in the case shown in (B) of FIG. 8), it is not possible to ignore the change in the operation voltage Vm = R·I of the photovoltaic module M, and the combined I-V curve of the photovoltaic cells C2, ..., Cm moves to the positive voltage side (right side of (B) of FIG. 8) by the operation voltage Vm = R·I of the photovoltaic module M in accordance with the increase in the output current I of the photovoltaic module M.

FIG. 10 is a diagram showing an example of a relationship between the I-V curve of the determination target photovoltaic cell C 1, the combined I-V curve of the photovoltaic cells C2, ..., and Cm, and the light shielding rate r of the determination target photovoltaic cell C1 in a case where an abnormality is not present in the parallel resistance component of the determination target photovoltaic cell C1 and the resistance value R of the load resistor RL connected to the photovoltaic module M is greater than 0.

In the example shown in FIG. 10, similarly to the example shown in (b) of FIG. 8, the combined I-V curve of the photovoltaic cells C2, ..., and Cm moves to the positive voltage side (right side of FIG. 10) by the operation voltage Vm = R I of the photovoltaic module M in accordance with the increase in the output current I of the photovoltaic module M.

In the example shown in FIG. 10 (that is, the example in which an abnormality is not present in the parallel resistance component of the determination target photovoltaic cell C1), in a case where the light shielding rate r of the determination target photovoltaic cell C1 is changed in a range of 0.04 to 1, the output current I of the photovoltaic module M is changed in accordance with the change in the light shielding rate r of the determination target photovoltaic cell C1. Specifically, in a case where the light shielding rate r of the determination target photovoltaic cell C1 is increased from 0.04 to 0.25, the output current I of the photovoltaic module M is decreased in accordance with the increase in the light shielding rate r of the determination target photovoltaic cell C1. In a case where the light shielding rate r of the determination target photovoltaic cell C1 is further increased from 0.25 to 0.49, the output current I of the photovoltaic module M is further decreased in accordance with the increase in the light shielding rate r of the determination target photovoltaic cell C1. In a case where the light shielding rate r of the determination target photovoltaic cell C1 is further increased from 0.49 to 1, the output current I of the photovoltaic module M is further decreased in accordance with the increase in the light shielding rate r of the determination target photovoltaic cell C1.

As described above, in the first example of the abnormality determination system 1 of the photovoltaic module M according to the first embodiment, the light shielding rate range of the output current change, which is a range of the light shielding rate r of the determination target photovoltaic cell C1 in which the output current I of the photovoltaic module M is changed in accordance with the change in the light shielding rate r of the determination target photovoltaic cell C1 in a case where the light shielding rate r of the determination target photovoltaic cell C1 is changed, is set to the range of the light shielding rate r of 0.5 to 1. In a case where the light shielding rate range of the output current change (the light shielding rate r is 0.5 to 1) of the determination target photovoltaic cell C1 is between 0 and 1, the abnormality determination unit 1C determines that an abnormality is not present in the parallel resistance component of the determination target photovoltaic cell C1.

In the example shown in FIG. 10 (that is, the example in which an abnormality in the parallel resistance component of the determination target photovoltaic cell C1 shown in FIG. 10 is determined), in a case where the light shielding rate r of the determination target photovoltaic cell C1 is increased from 0.5 to 1, the output current I of the photovoltaic module M is decreased in accordance with the increase in the light shielding rate r of the determination target photovoltaic cell C1. Therefore, the abnormality determination unit 1C determines that the light shielding rate range of the output current change (the range in which the light shielding rate r is 0.5 to 1) is between the light shielding rate of 0 and 1 of the determination target photovoltaic cell C1, and determines that an abnormality is not present in the parallel resistance component of the determination target photovoltaic cell C1.

FIG. 11 is a diagram showing an example of a relationship between the I-V curve of the determination target photovoltaic cell C 1, the combined I-V curve of the photovoltaic cells C2, ..., and Cm, and the light shielding rate r of the determination target photovoltaic cell C1 in a case where an abnormality is present in the parallel resistance component of the determination target photovoltaic cell C1 and the resistance value R of the load resistor RL connected to the photovoltaic module M is greater than 0.

In the example shown in FIG. 11, similarly to the example shown in (B) of FIG. 8, the combined I-V curve of the photovoltaic cells C2, ..., and Cm moves to the positive voltage side (right side of FIG. 11) by the operation voltage Vm = R I of the photovoltaic module M in accordance with the increase in the output current I of the photovoltaic module M.

In the example shown in FIG. 11 (that is, the example in which an abnormality is present in the parallel resistance component of the determination target photovoltaic cell C1), the output current I of the photovoltaic module M is hardly changed even in a case where the light shielding rate r of the determination target photovoltaic cell C1 is changed in a range of 0 to 0.68.

As described above, in the first example of the abnormality determination system 1 of the photovoltaic module M according to the first embodiment, the light shielding rate range of the non-output current change which is the range of the light shielding rate r of the determination target photovoltaic cell C1, in which the output current I of the photovoltaic module M is hardly changed even in a case where the light shielding rate r of the determination target photovoltaic cell C1 is changed, is set to the range of the light shielding rate r of 0 to 0.5. In a case where the light shielding rate range of the non-output current change (the light shielding rate r is in the range of 0 to 0.5) is between the light shielding rate of 0 and 1 of the determination target photovoltaic cell C1, the abnormality determination unit 1C determines that the abnormality is present in the parallel resistance component of the determination target photovoltaic cell C1.

In the example shown in FIG. 11 (that is, the example in which an abnormality in the parallel resistance component of the determination target photovoltaic cell C1 shown in FIG. 11 is determined), the output current I of the photovoltaic module M is hardly changed even in a case where the light shielding rate r of the determination target photovoltaic cell C1 is increased from 0 to 0.5. Therefore, the abnormality determination unit 1C determines that the light shielding rate range of the non-output current change (the light shielding rate r is in the range of 0 to 0.5) is between the light shielding rate of 0 and 1 of the determination target photovoltaic cell C1, and determines that an abnormality is present in the parallel resistance component of the determination target photovoltaic cell C1.

FIG. 12 is a flowchart for explaining an example of a process executed in the abnormality determination system 1 of the photovoltaic module M according to the first embodiment.

In the example shown in FIG. 12, in step S1A, the output current acquisition unit 1A acquires the output current I of the photovoltaic module M during power generation.

In step S1B, the light shielding rate acquisition unit 1B acquires the light shielding rate r of the determination target photovoltaic cell C1 which is the photovoltaic cell that is a determination target of the presence or absence of an abnormality in the parallel resistance component.

In step S1C, the abnormality determination unit 1C determines the presence or absence of an abnormality in the parallel resistance component of the determination target photovoltaic cell C1.

Specifically, In a case where the light shielding rate range of the output current change (the light shielding rate r is 0.5 to 1) of the determination target photovoltaic cell C1 is between 0 and 1 and the output current I of the photovoltaic module M changes in accordance with the change in the light shielding rate r of the determination target photovoltaic cell C1 is between 0 and 1, the abnormality determination unit 1C determines that an abnormality is not present in the parallel resistance component of the determination target photovoltaic cell C1.

In addition, in a case where the light shielding rate range of the non-output current change (for example, the light shielding rate r is in the range of 0 to 0.5), in which the output current I of the photovoltaic module M is hardly changed even in a case where the light shielding rate r of the determination target photovoltaic cell C1 is changed, is between the light shielding rate of 0 and 1 of the determination target photovoltaic cell C1, the abnormality determination unit 1C determines that an abnormality is present in the parallel resistance component of the determination target photovoltaic cell C1.

As described above, in the abnormality determination system 1 of the photovoltaic module M according to the first embodiment estimates the presence or absence of an abnormality in the parallel resistance component of the determination target photovoltaic cell C1 using a phenomenon, in which the output current I of the photovoltaic module M in a case where the light shielding rate r of the determination target photovoltaic cell C1 is changed in accordance by applying, for example, the masks of various light shielding rates r to only the determination target photovoltaic cell C1 in the photovoltaic module M, is changed in accordance with the value of the parallel resistance component of the determination target photovoltaic cell C1, while holding the light transmittance (1 - light shielding rate) of the photovoltaic cells C2, ..., and Cm in the photovoltaic module M at 100%.

Therefore, in the abnormality determination system 1 of the photovoltaic module M according to the first embodiment, it is possible to determine the presence or absence of an abnormality in the parallel resistance component of the determination target photovoltaic cell C1 during the operation (power generation) of the photovoltaic module M even in a case where the photovoltaic cells C1, ..., and Cm are sealed in the photovoltaic module M.

<Examples>

FIG. 13 is a diagram showing an experimental apparatus according to a first example to a fourth example. The details of experiments according to the examples are as following bullet points.

- As a solar simulator, LED light (i.e., two SW-GL100ED56W, two SW-GL050ED48W, and four SW-GL030ED35W, all manufactured by Sunway) driven by an AC power source of 50 Hz was used in which 100 $W/m^2$ of light was output.
- Photovoltaic module: m = 5 equivalent polycrystalline Si cells that can be regarded as normal (made in China, 16 mm × 63 mm in size, short-circuit current of 250 mA, open-circuit voltage of 0.6 V, FF of substantially 0.65 under standard conditions (1000 $W/m^2$), and in the range of $R_{sh}$ ≈ 1.2 kS2 to 5.2 kΩ of the cell equivalent circuit of FIG. 19) are connected in series. As the photovoltaic cell numbers in the photovoltaic module, cell 1 to cell 5 were assigned from the negative electrode terminal toward the positive electrode terminal of the photovoltaic module. Since the amount of light of the solar simulator was weaker than the standard conditions, the open-circuit voltage voc ≈ 0.5 V Since any photovoltaic cell had no local defects and had a uniform power generation performance in the photovoltaic cell, the determination target photovoltaic cell was covered with a complete light shielding body such as aluminum tape corresponding to the relative area of the light shielding rate r described above. In addition, since the amount of light of the solar simulator had a small dependence on the irradiation position, the short-circuit currents of all the photovoltaic cells were not equal but had values close to each other.

The resistance value R of the fixed load resistor RL of the photovoltaic module was approximately equal to 1 Ω. At that time, the operation voltage Vm of the photovoltaic module = R I ≈ I, and the operation voltage Vm of the photovoltaic module was roughly reinterpreted as the output current I of the photovoltaic module. In addition, since the value of R·I was smaller than the absolute value of the cell voltage, it was possible to regard the value of R at which it was possible to ignore the decrease (change) in the operation voltage Vm=R I of the photovoltaic module M described above.

- In a case where the cell 2 or the cell 3 in the photovoltaic module was simulated as a defective photovoltaic cell, in which a parallel resistance $R_{sh}$ was approximately equal to 40 S2 or 80 S2, was connected in parallel to the determination target photovoltaic cell. It was confirmed in a preliminary experiment that it is possible to simulate a defective cell due to a moderate PID phenomenon by connecting the parallel resistance $R_{sh}$. A data logger (NR-600 manufactured by Keyence Corporation and the same analog measurement unit NR-HA08) were used for simultaneous recording of each cell voltage in the photovoltaic module and the output current I of the photovoltaic module. The experimental results were analyzed using the time average value of each value in which a measurement time of 1 s is recorded as a sampling period of 0.1 ms.

<First example>

FIG. 14 is a diagram showing an application example to a normal cell (cell 2) that shows a low voltage without light shielding.

As shown in FIG. 14, as a result of applying various partial light shielding masks to the cell 2 (normal with no parallel resistance $R_{sh}$), which has no light shielding (light transmittance of 100%) and a voltage of -1.00 V, the output current I of the photovoltaic module is substantially proportional to the light transmittance (1 - light shielding rate r). The coefficient of determination $R^2$ = 0.9982 in the proportional equation obtained by the regression analysis and is actually proportional.

Based on the above-described idea, it is possible to determine the cell 2 in FIG. 14 to be a normal cell having a high parallel resistance component.

In addition, the voltage of the cell 2 is rapidly decreased and saturated at a vicinity of $Vm - (m - 1)v_{oc}$ = 0.070 - 4 × 0.5 = -1.93 V (Vm = 0.070 V is the operation voltage of the photovoltaic module without light shielding (light transmittance of 100%)) with a light transmittance of 90% (light shielding rate r = 0.1) which is a slightly light shielded. This is also as described above. However, it is difficult to measure the voltage of the cell 2 corresponding to each cell sealed in the practical module, and is not used in the present invention.

<Second example>

FIGS. 15 and 16 are diagrams showing an application example to a defective simulation cell that uses a cell showing a low voltage without light shielding. Specifically, FIG. 15 shows an application example in which a parallel resistance $R_{sh} \approx 80$ S2 is connected in parallel to the cell 2, and FIG. 16 shows an application example in which a parallel resistance $R_{sh} \approx 40$ S2 is connected in parallel to the cell 2.

As shown in FIG. 15, various partial light shielding masks are applied to the cell 2 (parallel resistance $R_{sh} \approx 80$ S2 is connected for defective simulation) having a voltage of -0.09 V without light shielding (light transmittance of 100%). As a result, the output current I of the photovoltaic module is substantially constant with a light transmittance of 70% or greater ($r_{ex} \approx 0.3$) but the output current I of the photovoltaic module is decreased in accordance with the change in the light transmittance at a light transmittance of 70% or less.

From FIG. 15, it is possible to regard the value $r_{ex} \approx 0.3$ of the light shielding rate r of the determination target photovoltaic cell, in which the output current I of the photovoltaic module decreases from the value $I_{r=0}$ on the I axis in a case where the above-described light shielding rate r of the determination target photovoltaic cell is increased. Therefore, $(Vm - (m - 1)v_{oc})/(r_{ex} \cdot I_{r=0}) \approx 91$ S2 is obtained from $Vm - (m - 1)v_{oc} = 0.070 - 4 \times 0.5 = -1.93$ V (Vm = 0.070 V is the operation voltage of the photovoltaic module without light shielding (light transmittance of 100%) and $I_{r=0} = 0.070$ A, and a value is obtained which is close to the parallel resistance $R_{sh} \approx 80\ \Omega$ connected for defective simulation.

Based on the above-described idea, it is possible to determine that the cell 2, to which the parallel resistance $R_{sh} \approx 80\ \Omega$ in FIG. 15 is connected, was a defective cell having a low parallel resistance component, and, further, it is possible to roughly estimate the value of the low parallel resistance component of the defective cell.

As shown in FIG. 16, various partial light shielding masks are applied to the cell 2 (parallel resistance $R_{sh} \approx 40\ \Omega$ is connected for defective simulation) for further deteriorated defective simulation. As a result, the output current I of the photovoltaic module is substantially constant at a light transmittance of 50% or greater ($r_{ex} \approx 0.5$), but the output current I of the photovoltaic module is decreased in accordance with the light transmittance at a light transmittance of 50% or less.

From FIG. 16, it is possible to regard the above-described value $r_{ex} \approx 0.5$. Therefore, $(Vm - (m - 1)v_{oc})/(r_{ex} \cdot I_{r=0}) \approx 58$ S2 is obtained from $Vm - (m - 1)v_{oc} = 0.067 - 4 \times 0.5 = -1.93$ V (Vm = 0.067 V is the operation voltage of the photovoltaic module without light shielding (light transmittance of 100%) and $I_{r=0} = 0.067$ A, and a value was obtained which is close to the parallel resistance $R_{sh} \approx 40$ S2 connected for defective simulation.

Based on the above-described idea, it is possible to determine that the cell 2, to which the parallel resistance $R_{sh} \approx 40\ \Omega$ of FIG. 16 is connected, is a defective cell having a low parallel resistance component, and, further, it is possible to roughly estimate the value of the low parallel resistance component of the defective cell.

<Third example>

FIG. 17 is a diagram showing an application example to a normal cell (cell 3) showing a high voltage without light shielding.

As shown in FIG. 17, as a result that various partial light shielding masks are applied to the cell 3 (which is normal without the parallel resistance $R_{sh}$) having a voltage of +0.36 V without light shielding (light transmittance of 100%), the output current I of the photovoltaic module is substantially proportional to the light transmittance (1 - light shielding rate r). The coefficient of determination $R^2 = 0.9922$ in the proportional equation obtained by the regression analysis and is actually proportional.

Based on the above-described idea, it is possible to determine that the cell 3 in FIG. 17 is a normal cell having a high parallel resistance component.

In addition, the voltage of the cell 3 is rapidly decreased and saturated at a vicinity of $Vm - (m - 1)v_{oc} = 0.070 - 4 \times 0.5 = -1.93$ V (Vm = 0.070 V is the operation voltage of the photovoltaic module without light shielding (light transmittance of 100%)) with a light transmittance of 90% (light shielding rate r = 0.1) which is a slightly light shielded. This is also as described above. However, it is difficult to measure the voltage of the cell 3 corresponding to each cell sealed in the practical module, thereby being not used in the present invention.

<Fourth example>

FIG. 18 is a diagram showing an application example to a defective simulation cell (parallel resistance $R_{sh} \approx 80\ \Omega$ is connected in parallel to the cell 3) that uses a cell showing a high voltage without light shielding.

As shown in FIG. 18, various partial light shielding masks are applied to the cell 3 (parallel resistance $R_{sh} \approx 80\ \Omega$ is connected for defective simulation) having a voltage of + 0.13 V without light shielding (light transmittance of 100%). As a result, the output current I of the photovoltaic module is substantially constant at a light transmittance of 70% or greater ($r_{ex} \approx 0.3$), but the output current I of the photovoltaic module is decreased in accordance with the light transmittance at a light transmittance of 70% or less.

From FIG. 18, it is possible to regard the value $r_{ex} \approx 0.3$ of the light shielding rate r of the determination target photovoltaic cell, in which the output current I of the photovoltaic module decreases from the value $I_{r=0}$ on the I axis in a case where the above-described light shielding rate r of the determination target photovoltaic cell is increased. Therefore, $(Vm - (m - 1)v_{oc})/(r_{ex} \cdot I_{r=0}) \approx 89$ S2 is obtained from $Vm - (m - 1)v_{oc} = 0.072 - 4 \times 0.5 = -1.93$ V (Vm = 0.072 V is the operation voltage of the photovoltaic module without light shielding (light transmittance of 100%) and $I_{r=0} = 0.072$ A, and a value is obtained which is close to the parallel resistance $R_{sh} \approx 80\ \Omega$ connected for defective simulation.

Based on the above-described idea, it is possible to determine the cell 3, to which the parallel resistance $R_{sh} \approx 80\ \Omega$ of FIG. 18 is connected, is a defective cell having a low parallel resistance component, and, further, it is possible to roughly estimate the value of the low parallel resistance component of the defective cell.

<Fifth example>

A simple method of using the present invention will be described.

As shown in FIGS. 14 and 17, the output current I of the photovoltaic module is substantially 0 in a case where the parallel resistance $R_{sh}$ is not present and the light transmittance of the normal determination target photovoltaic cell is 0% (light shielding rate r = 1). By using the above property, in the abnormality determination system 1 of the photovoltaic module M according to the first embodiment, it is possible to determine that an abnormality is not present in the parallel resistance component of the determination target photovoltaic cell in a case where the output current I of the photovoltaic module is substantially 0 in a case of a light transmittance of 0% (light shielding rate r = 1).

As shown in FIGS. 15, 16, and 18, the output current I of the photovoltaic module has a value sufficiently greater than 0 in a case where the defective simulation cell (determination target photovoltaic cell) having the parallel resistance $R_{sh}$ has a light transmittance of 0% (light shielding rate r = 1). The reason for this is that the current flowing from the photovoltaic cell other than the determination target photovoltaic cell flows through the low parallel resistance component of the determination target photovoltaic cell. By using the above property, in the abnormality determination system 1 of the photovoltaic module M according to the first embodiment, it is possible to determine that an abnormality is present in the parallel resistance component of the determination target photovoltaic cell in a case where the output current I of the photovoltaic module is greater than 0 in a case of a light transmittance of 0% (light shielding rate r = 1) of the determination target photovoltaic cell.

[Second embodiment]

Hereinafter, a second embodiment of the photovoltaic module abnormality determination system, the photovoltaic module abnormality determination method, and the program according to the present invention will be described.

The abnormality determination system 1 for the photovoltaic module M of the second embodiment is composed of in the same manner as the abnormality determination system 1 for the photovoltaic module M according to the first embodiment described above, except as described later. Therefore, according to the abnormality determination system 1 for the photovoltaic module M of the second embodiment, the same effects as in the abnormality determination system 1 for the photovoltaic module M according to the first embodiment described above can be obtained, except as described later.

In the photovoltaic module M, in which the presence or absence of the abnormality is determined by the abnormality determination system 1 of the photovoltaic module M according to the first embodiment, as shown in (A) of FIG. 1, the light shielding rate r of the determination target photovoltaic cell C1 is changed by the light shielding rate change unit A1, and the light shielding rate change unit A1 is disposed close to or relatively close to the photovoltaic module M.

On the other hand, in the photovoltaic module M according to the second embodiment, solar light applied to the determination target photovoltaic cell C1 is shielded by the light shielding rate change unit A1 located at a position separated from the photovoltaic module M, and the light shielding rate r of the determination target photovoltaic cell C1 is changed. As the light shielding rate change unit A1, for example, a drone or the like is used.

That is, the light shielding rate change unit A1 applied to the abnormality determination system 1 of the photovoltaic module M according to the second embodiment has a function of moving a designated path including the photovoltaic module M by a manual operation through a remote operation or automatic operation by a computer or the like. In this example, the light shielding rate r of the determination target photovoltaic cell is changed by linking the position and the time on the determination target photovoltaic cell (for example, the photovoltaic cell C1 or the like) with the output current I of the photovoltaic module M from the position of the light shielding rate change unit A1, thereby estimating the value of the parallel resistance component of the determination target photovoltaic cell which is any of the photovoltaic cells C1, ..., or Cm of the photovoltaic module M.

Hereinabove, although the embodiments of the present invention are described in detail with reference to the drawings, a specific configuration is not limited to the embodiments and can be appropriately modified without departing from the gist of the present invention. The configurations described in each of the embodiments and each of the examples, which are described above, may be combined.

Note that, all or part of the abnormality determination system 1 for the photovoltaic module M of the above-described embodiment may be realized by dedicated hardware or may be realized by a memory and a microprocessor.

All or part of the abnormality determination system 1 for the photovoltaic module M may be composed of a memory and a Central Processing Unit (CPU) and realizes a function thereof by loading and executing a program for realizing the function of each of the units included in each system in the memory.

The process of each unit may be performed by recording a program for realizing all or a part of the functions of the abnormality determination system 1 for the photovoltaic module M on a computer-readable recording medium, and reading and executing the program recorded on the recording medium in the computer system. Note that, here, the "computer system" includes an OS and hardware such as a peripheral device. Further, the "computer system" includes a homepage providing environment (or a display environment) in a case where a WWW system is used.

In addition, the "computer-readable recording medium" refers to a portable medium, such as a flexible disk, a magneto-optical disk, a ROM, and a CD-ROM, and a storage device such as a hard disk built in the computer system. Further, the "computer-readable recording medium" includes a medium which dynamically holds a program for a short time like a communication line in a case of transmitting the program through a network such as the Internet or a communication line such as a telephone line, and a medium which holds a program for a certain period of time like a volatile memory in the computer system serving as a server or a client in the case. In addition, the program may be provided to realize a part of the above-described functions or may be realized by combining the above-described functions with a program already recorded in the computer system.

[Reference Signs List]

1: Abnormality determination system
1A: Output current acquisition unit
1B: Light shielding rate acquisition unit
1C: Abnormality determination unit
1C1: I-V curve estimation unit
1D: Operation voltage acquisition unit
1E: Resistance value acquisition unit
1F: Parallel resistance component calculation unit
M: Photovoltaic module
C1, C2, ... Cm: Photovoltaic cell
RL: Load resistor
A1: Light shielding rate change unit
A2: Output current detection unit
A3: Operation voltage detection unit

## Claims

**1.** A photovoltaic module abnormality determination system that determines presence or absence of an abnormality in a parallel resistance component of each of a plurality of photovoltaic cells connected in series to constitute a photovoltaic module, the photovoltaic module abnormality determination system comprising:

an output current acquisition unit configured to acquire an output current of the photovoltaic module during power generation;
a light shielding rate acquisition unit configured to acquire a light shielding rate of a determination target photovoltaic cell that is a photovoltaic cell corresponding to a determination target for presence or absence of an abnormality in a parallel resistance component; and
an abnormality determination unit configured to determine that the abnormality is not present in the parallel resistance component of the determination target photovoltaic cell in a case where a light shielding rate range of output current change, which is a range of the light shielding rate of the determination target photovoltaic cell in which the output current of the photovoltaic module changes in accordance with a change in the light shielding rate of the determination target photovoltaic cell in a case where the light shielding rate of the determination target photovoltaic cell is changed, is between a light shielding rate of 0 and 1 of the determination target photovoltaic cell, and
determine that the abnormality is present in the parallel resistance component of the determination target photovoltaic cell in a case where a light shielding rate range of non-output current change, which is a range of the light shielding rate of the determination target photovoltaic cell in which the output current of the photovoltaic module hardly changes even in a case where the light shielding rate of the determination target photovoltaic cell is changed, is between the light shielding rate of 0 and 1 of the determination target photovoltaic cell.

**2.**

The photovoltaic module abnormality determination system according to Claim 1, wherein
in a case where the light shielding rate range of the non-output current change is between the light shielding rate of 0 and 1 of the determination target photovoltaic cell, and

in a case where the light shielding rate range of the non-output current change is in a range where the light shielding rate of the determination target photovoltaic cell is a first threshold value or less, and the output current of the photovoltaic module is changed in accordance with a change in the light shielding rate of the determination target photovoltaic cell in a case where the light shielding rate of the determination target photovoltaic cell is changed in a range in which the light shielding rate of the determination target photovoltaic cell is greater than the first threshold value,

the abnormality determination unit determines that the abnormality is present in the parallel resistance component of the determination target photovoltaic cell.

**3.** The photovoltaic module abnormality determination system according to Claim 2, wherein

the abnormality determination unit includes an I-V curve estimation unit that estimates an I-V curve of the plurality of photovoltaic cells,

the I-V curve estimation unit estimates an I-V curve of the determination target photovoltaic cell based on the output current of the photovoltaic module during power generation acquired by the output current acquisition unit, the light shielding rate of the determination target photovoltaic cell acquired by the light shielding rate acquisition unit, and a combined I-V curve of the photovoltaic cells other than the determination target photovoltaic cell in the photovoltaic module, and

the abnormality determination unit determines the presence or absence of the abnormality in the parallel resistance component of the determination target photovoltaic cell based on the I-V curve of the determination target photovoltaic cell estimated by the I-V curve estimation unit.

**4.** The photovoltaic module abnormality determination system according to Claim 3, wherein
a shape of the combined I-V curve in a case where a resistance value of a load resistor connected to the photovoltaic module during power generation is substantially 0 is different from a shape of the combined I-V curve in a case where the resistance value of the load resistor connected to the photovoltaic module during power generation is greater than 0.

**5.** The photovoltaic module abnormality determination system according to Claim 3, further comprising:
a parallel resistance component calculation unit configured to calculate a value of the parallel resistance component of the determination target photovoltaic cell which is determined that the abnormality is present by the abnormality determination unit.

**6.** The photovoltaic module abnormality determination system according to Claim 5, wherein

in a case where a resistance value of a load resistor connected to the photovoltaic module during power generation is substantially 0,

the parallel resistance component calculation unit calculates the value of the parallel resistance component of the determination target photovoltaic cell which is determined that the abnormality is present by the abnormality determination unit based on an operation voltage of the photovoltaic module, a value of a V axis at an intersection of the combined I-V curve and the V axis, a value of an I axis at an intersection of the combined I-V curve and the I axis, and a value of the light shielding rate of the determination target photovoltaic cell in which the output current of the photovoltaic module decreases from the value of the I axis in a case where the light shielding rate of the determination target photovoltaic cell is increased.

**7.** The photovoltaic module abnormality determination system according to Claim 5, wherein

in a case where a resistance value of a load resistor connected to the photovoltaic module during power generation is greater than 0,

the parallel resistance component calculation unit calculates the value of the parallel resistance component of the determination target photovoltaic cell which is determined that the abnormality is present by the abnormality determination unit based on the resistance value of the load resistor, a value of a V axis at an intersection of the combined I-V curve and the V axis, a value of an I axis at an intersection of the combined I-V curve and the I axis, and a value of the light shielding rate of the determination target photovoltaic cell in which the output current of the photovoltaic module decreases from the value of the I axis in a case where the light shielding rate of the determination target photovoltaic cell is increased.

**8.** The photovoltaic module abnormality determination system according to any one of Claims 1 to 7, wherein
the light shielding rate of the determination target photovoltaic cell is changed by changing a state in which an entirety or a part of the determination target photovoltaic cell is covered with at least any of a light attenuating film, a porous plate, a net, or a complete light shielding body.

**9.** The photovoltaic module abnormality determination system according to Claim 1, wherein

in a case where the light shielding rate of the determination target photovoltaic cell is 1 and the output current of the photovoltaic module during power generation is greater than 0,
the abnormality determination unit determines that the abnormality is present in the parallel resistance component of the determination target photovoltaic cell.

**10.** A photovoltaic module abnormality determination method for determining presence or absence of an abnormality in a parallel resistance component of each of a plurality of photovoltaic cells connected in series to constitute a photovoltaic module, the photovoltaic module abnormality determination method comprising:

an output current acquisition step of acquiring an output current of the photovoltaic module during power generation;
a light shielding rate acquisition step of acquiring a light shielding rate of a determination target photovoltaic cell that is a photovoltaic cell corresponding to a determination target for presence or absence of an abnormality in a parallel resistance component; and
an abnormality determination step of
determining that the abnormality is not present in the parallel resistance component of the determination target photovoltaic cell in a case where a light shielding rate range of output current change, which is a range of the light shielding rate of the determination target photovoltaic cell in which the output current of the photovoltaic module changes in accordance with a change in the light shielding rate of the determination target photovoltaic cell in a case where the light shielding rate of the determination target photovoltaic cell is changed, is between a light shielding rate of 0 and 1 of the determination target photovoltaic cell, and
determining that the abnormality is present in the parallel resistance component of the determination target photovoltaic cell in a case where a light shielding rate range of non-output current change, which is a range of the light shielding rate of the determination target photovoltaic cell in which the output current of the photovoltaic module hardly changes even in a case where the light shielding rate of the determination target photovoltaic cell is changed, is between the light shielding rate of 0 and 1 of the determination target photovoltaic cell.

**11.** A program causing a computer, which constitutes a photovoltaic module abnormality determination system that determines presence or absence of an abnormality in a parallel resistance component of each of a plurality of photovoltaic cells connected in series to constitute a photovoltaic module, to execute a process comprising:

an output current acquisition step of acquiring an output current of the photovoltaic module during power generation;
a light shielding rate acquisition step of acquiring a light shielding rate of a determination target photovoltaic cell that is a photovoltaic cell corresponding to a determination target for presence or absence of an abnormality in a parallel resistance component; and
an abnormality determination step of
determining that the abnormality is not present in the parallel resistance component of the determination target photovoltaic cell in a case where a light shielding rate range of output current change, which is a range of the light shielding rate of the determination target photovoltaic cell in which the output current of the photovoltaic module changes in accordance with a change in the light shielding rate of the determination target photovoltaic cell in a case where the light shielding rate of the determination target photovoltaic cell is changed, is between a light shielding rate of 0 and 1 of the determination target photovoltaic cell, and
determining that the abnormality is present in the parallel resistance component of the determination target photovoltaic cell in a case where a light shielding rate range of non-output current change, which is a range of the light shielding rate of the determination target photovoltaic cell in which the output current of the photovoltaic module hardly changes even in a case where the light shielding rate of the determination target photovoltaic cell is changed, is between the light shielding rate of 0 and 1 of the determination target photovoltaic cell.

FIG. 1

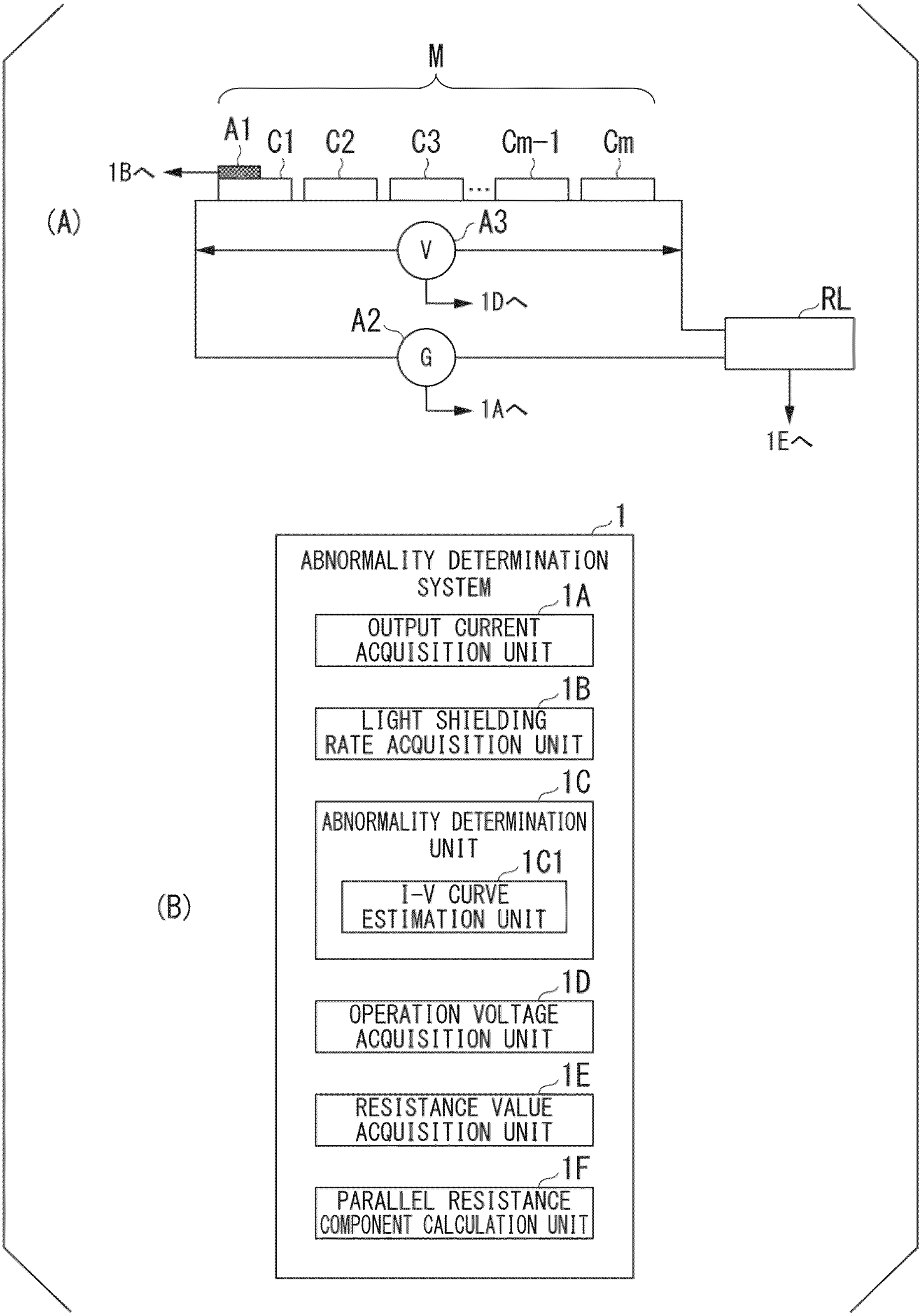
M
A1
C1
C2
C3
Cm-1
Cm
1Bへ
(A)
A3
V
1Dへ
RL
A2
G
1Aへ
1Eへ
1
ABNORMALITY DETERMINATION SYSTEM
1A
OUTPUT CURRENT ACQUISITION UNIT
1B
LIGHT SHIELDING RATE ACQUISITION UNIT
1C
ABNORMALITY DETERMINATION UNIT
1C1
I-V CURVE ESTIMATION UNIT
(B)
1D
OPERATION VOLTAGE ACQUISITION UNIT
1E
RESISTANCE VALUE ACQUISITION UNIT
1F
PARALLEL RESISTANCE COMPONENT CALCULATION UNIT

FIG. 2

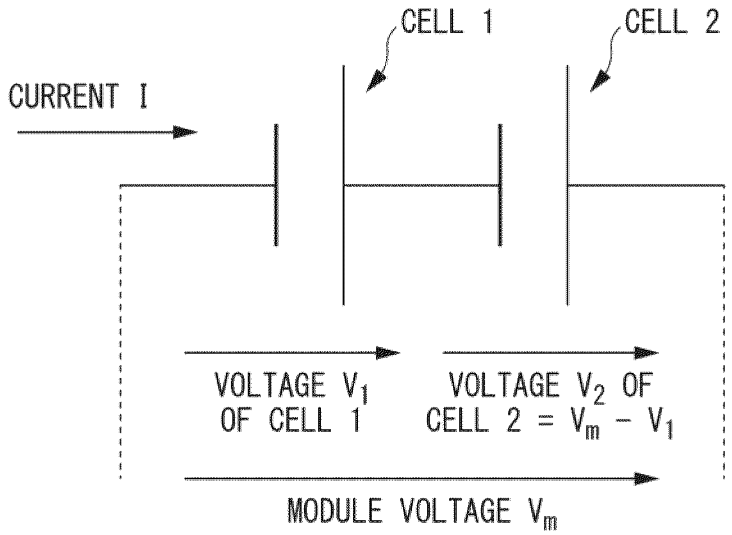
CELL 1
CELL 2
CURRENT I
VOLTAGE $V_1$ OF CELL 1
VOLTAGE $V_2$ OF CELL 2 = $V_m$ - $V_1$
MODULE VOLTAGE $V_m$

FIG. 3

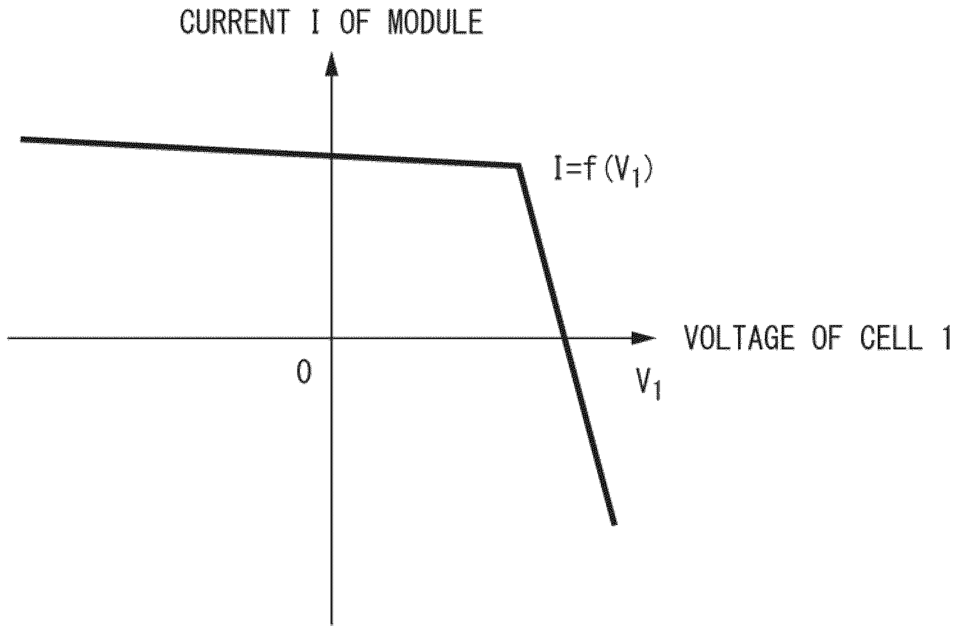
CURRENT I OF MODULE
I=f($V_1$)
VOLTAGE OF CELL 1
0
$V_1$

FIG. 4

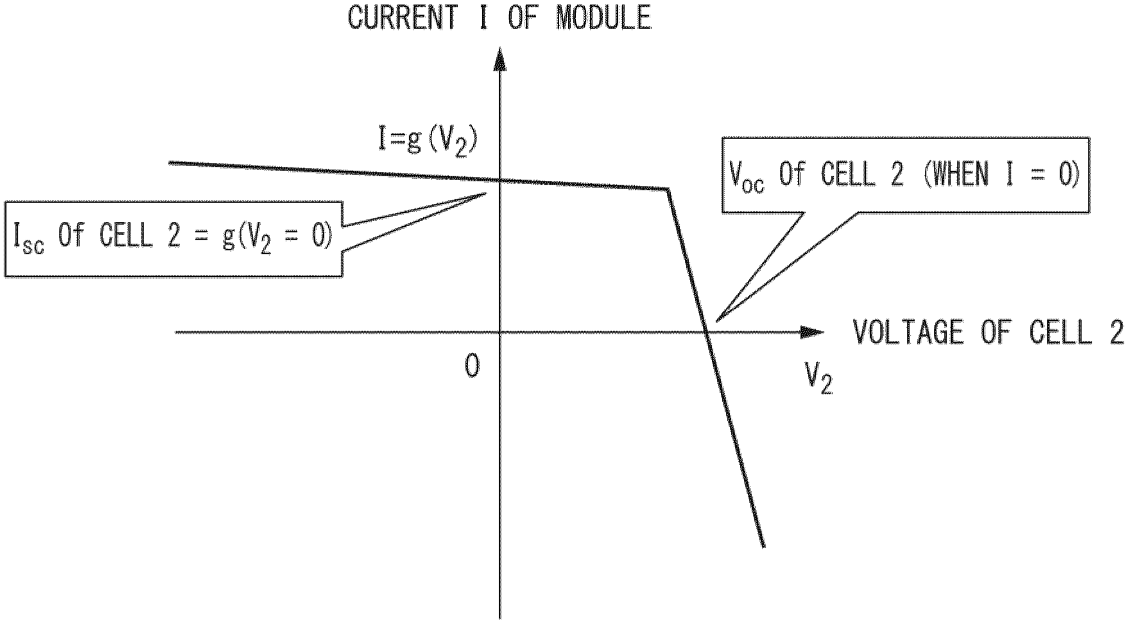
CURRENT I OF MODULE
I=g (V2)
Isc Of CELL 2 = g(V2 = 0)
Voc Of CELL 2 (WHEN I = 0)
VOLTAGE OF CELL 2
0
V2

FIG. 5

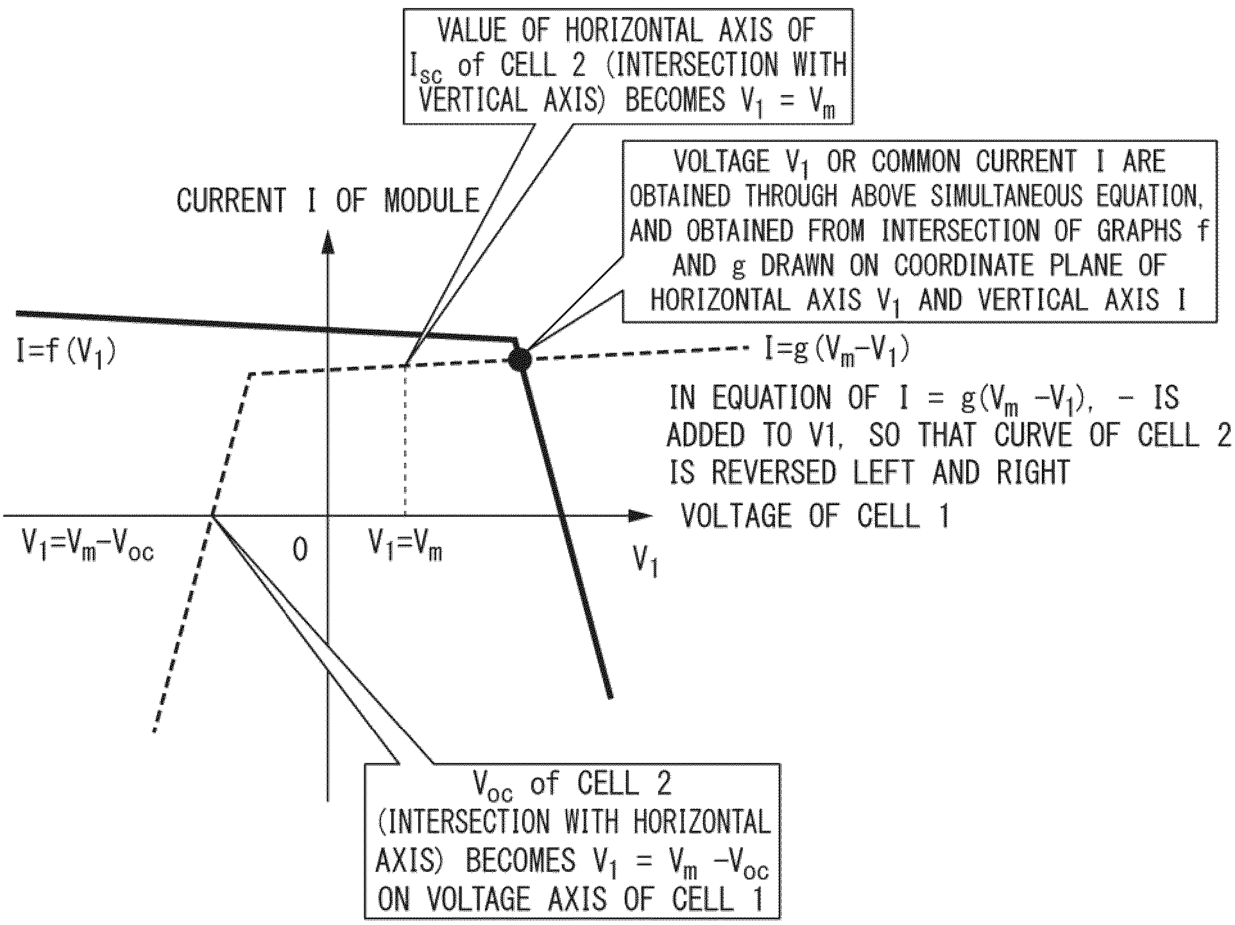
VALUE OF HORIZONTAL AXIS OF Isc of CELL 2 (INTERSECTION WITH VERTICAL AXIS) BECOMES V1 = Vm
VOLTAGE V1 OR COMMON CURRENT I ARE OBTAINED THROUGH ABOVE SIMULTANEOUS EQUATION, AND OBTAINED FROM INTERSECTION OF GRAPHS f AND g DRAWN ON COORDINATE PLANE OF HORIZONTAL AXIS V1 AND VERTICAL AXIS I
CURRENT I OF MODULE
I=f (V1)
I=g (Vm−V1)
IN EQUATION OF I = g(Vm −V1), − IS ADDED TO V1, SO THAT CURVE OF CELL 2 IS REVERSED LEFT AND RIGHT
VOLTAGE OF CELL 1
V1=Vm−Voc
0
V1=Vm
V1
Voc of CELL 2 (INTERSECTION WITH HORIZONTAL AXIS) BECOMES V1 = Vm −Voc ON VOLTAGE AXIS OF CELL 1

FIG. 6

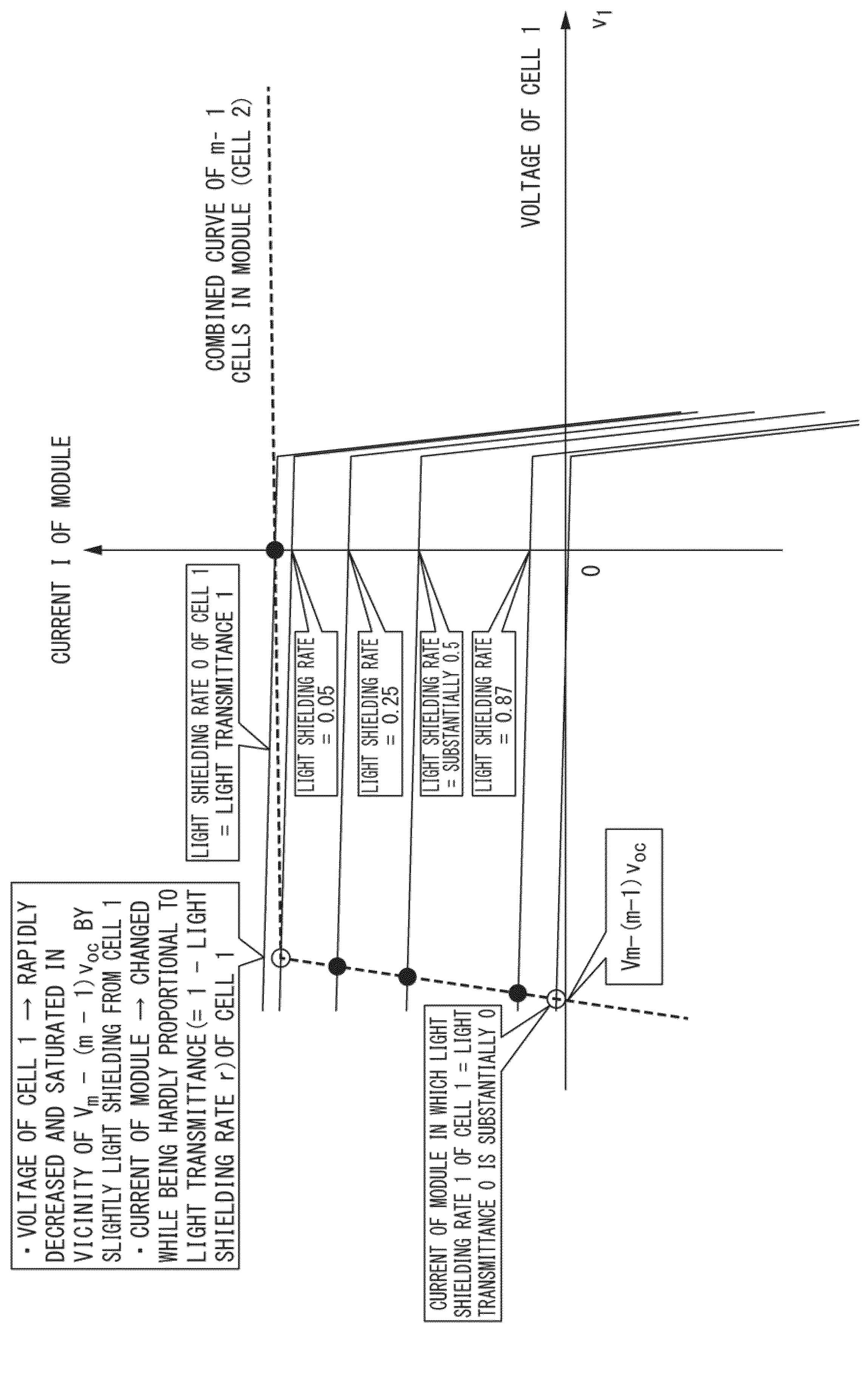
CURRENT I OF MODULE
VOLTAGE OF CELL 1
$v_1$
0
COMBINED CURVE OF m- 1 CELLS IN MODULE (CELL 2)
LIGHT SHIELDING RATE 0 OF CELL 1 = LIGHT TRANSMITTANCE 1
LIGHT SHIELDING RATE = 0.05
LIGHT SHIELDING RATE = 0.25
LIGHT SHIELDING RATE = SUBSTANTIALLY 0.5
LIGHT SHIELDING RATE = 0.87
$V_m-(m-1)v_{oc}$
· VOLTAGE OF CELL 1 → RAPIDLY DECREASED AND SATURATED IN VICINITY OF $V_m-(m-1)v_{oc}$ BY SLIGHTLY LIGHT SHIELDING FROM CELL 1
· CURRENT OF MODULE → CHANGED WHILE BEING HARDLY PROPORTIONAL TO LIGHT TRANSMITTANCE (= 1 - LIGHT SHIELDING RATE r) OF CELL 1
CURRENT OF MODULE IN WHICH LIGHT SHIELDING RATE 1 OF CELL 1 = LIGHT TRANSMITTANCE 0 IS SUBSTANTIALLY 0

FIG. 7

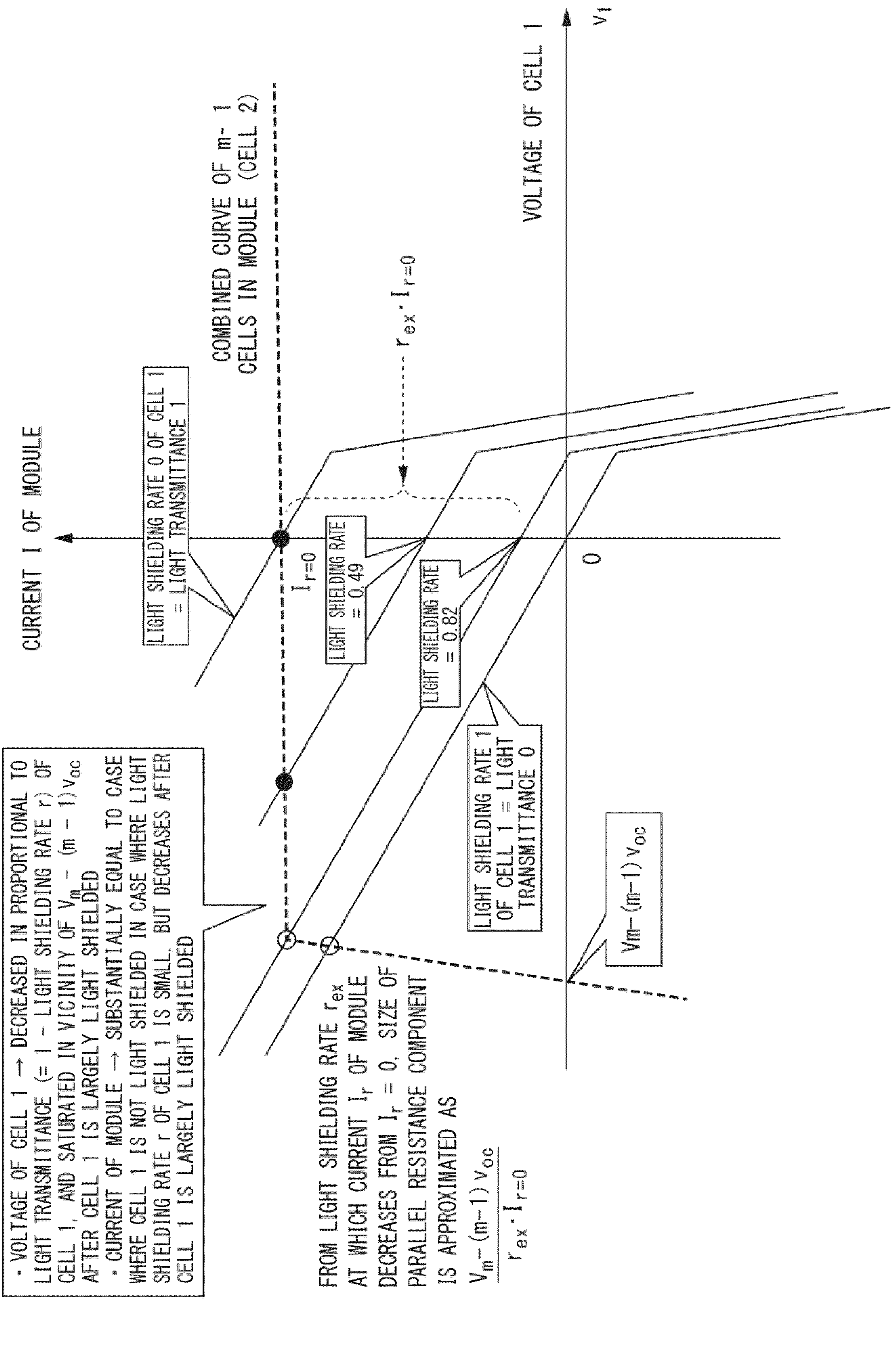

CURRENT I OF MODULE
VOLTAGE OF CELL 1
$v_1$
0
COMBINED CURVE OF m- 1 CELLS IN MODULE (CELL 2)
$r_{ex} \cdot I_{r=0}$
LIGHT SHIELDING RATE 0 OF CELL 1 = LIGHT TRANSMITTANCE 1
$I_{r=0}$
LIGHT SHIELDING RATE = 0.49
LIGHT SHIELDING RATE = 0.82
LIGHT SHIELDING RATE 1 OF CELL 1 = LIGHT TRANSMITTANCE 0
$V_m-(m-1)\,v_{oc}$
・VOLTAGE OF CELL 1 → DECREASED IN PROPORTIONAL TO LIGHT TRANSMITTANCE (= 1 - LIGHT SHIELDING RATE r) OF CELL 1, AND SATURATED IN VICINITY OF $V_m - (m - 1)\,v_{oc}$ AFTER CELL 1 IS LARGELY LIGHT SHIELDED
・CURRENT OF MODULE → SUBSTANTIALLY EQUAL TO CASE WHERE CELL 1 IS NOT LIGHT SHIELDED IN CASE WHERE LIGHT SHIELDING RATE r OF CELL 1 IS SMALL, BUT DECREASES AFTER CELL 1 IS LARGELY LIGHT SHIELDED
FROM LIGHT SHIELDING RATE $r_{ex}$ AT WHICH CURRENT $I_r$ OF MODULE DECREASES FROM $I_r = 0$, SIZE OF PARALLEL RESISTANCE COMPONENT IS APPROXIMATED AS
$\frac{V_m-(m-1)\,v_{oc}}{r_{ex} \cdot I_{r=0}}$

FIG. 8

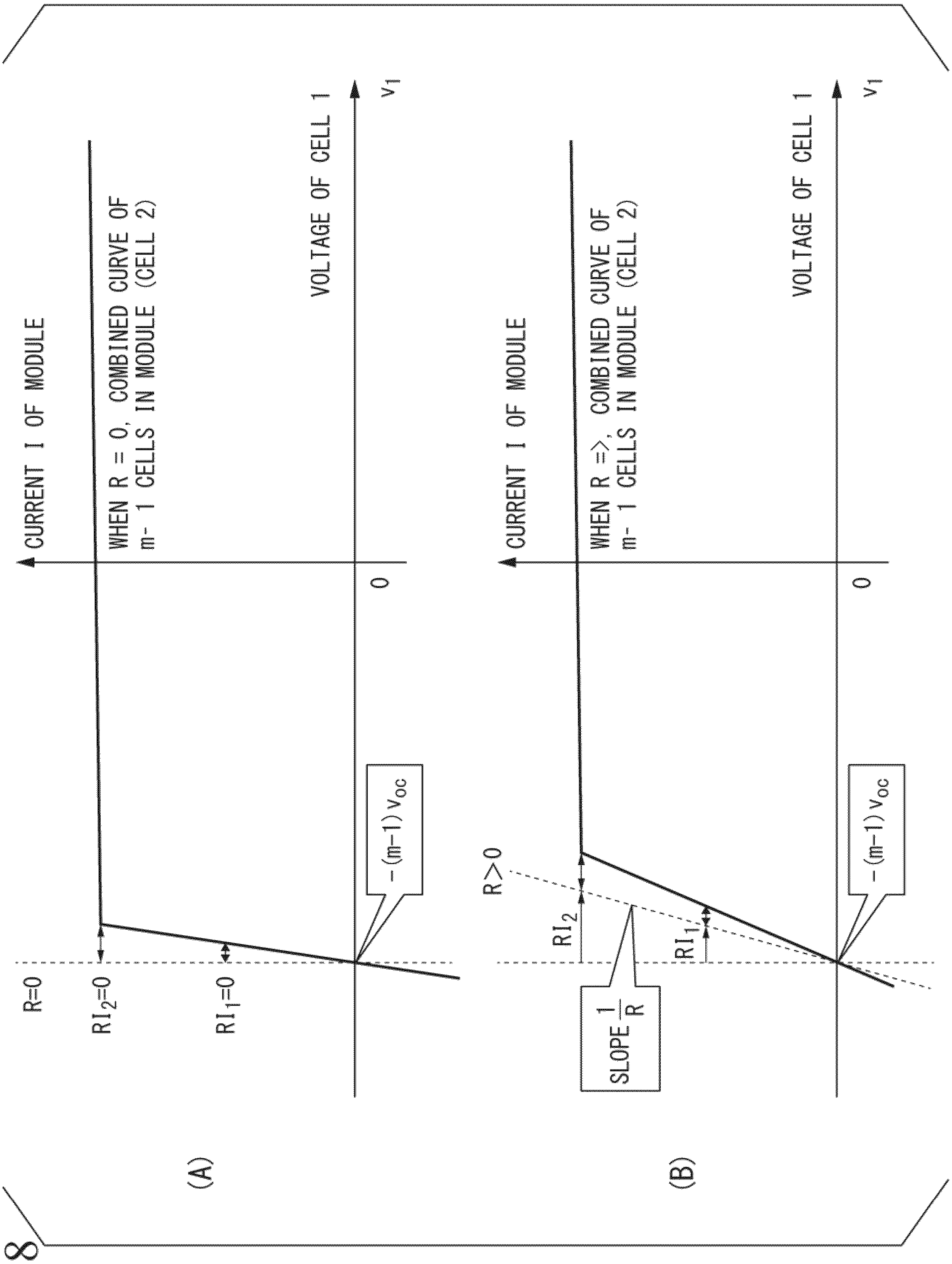
(A)
CURRENT I OF MODULE
WHEN R = 0, COMBINED CURVE OF
m- 1 CELLS IN MODULE (CELL 2)
VOLTAGE OF CELL 1
$v_1$
0
R=0
$RI_2$=0
$RI_1$=0
−(m−1) $v_{OC}$
(B)
CURRENT I OF MODULE
WHEN R =>, COMBINED CURVE OF
m- 1 CELLS IN MODULE (CELL 2)
VOLTAGE OF CELL 1
$v_1$
0
R>0
$RI_2$
$RI_1$
SLOPE $\frac{1}{R}$
−(m−1) $v_{OC}$

FIG. 9

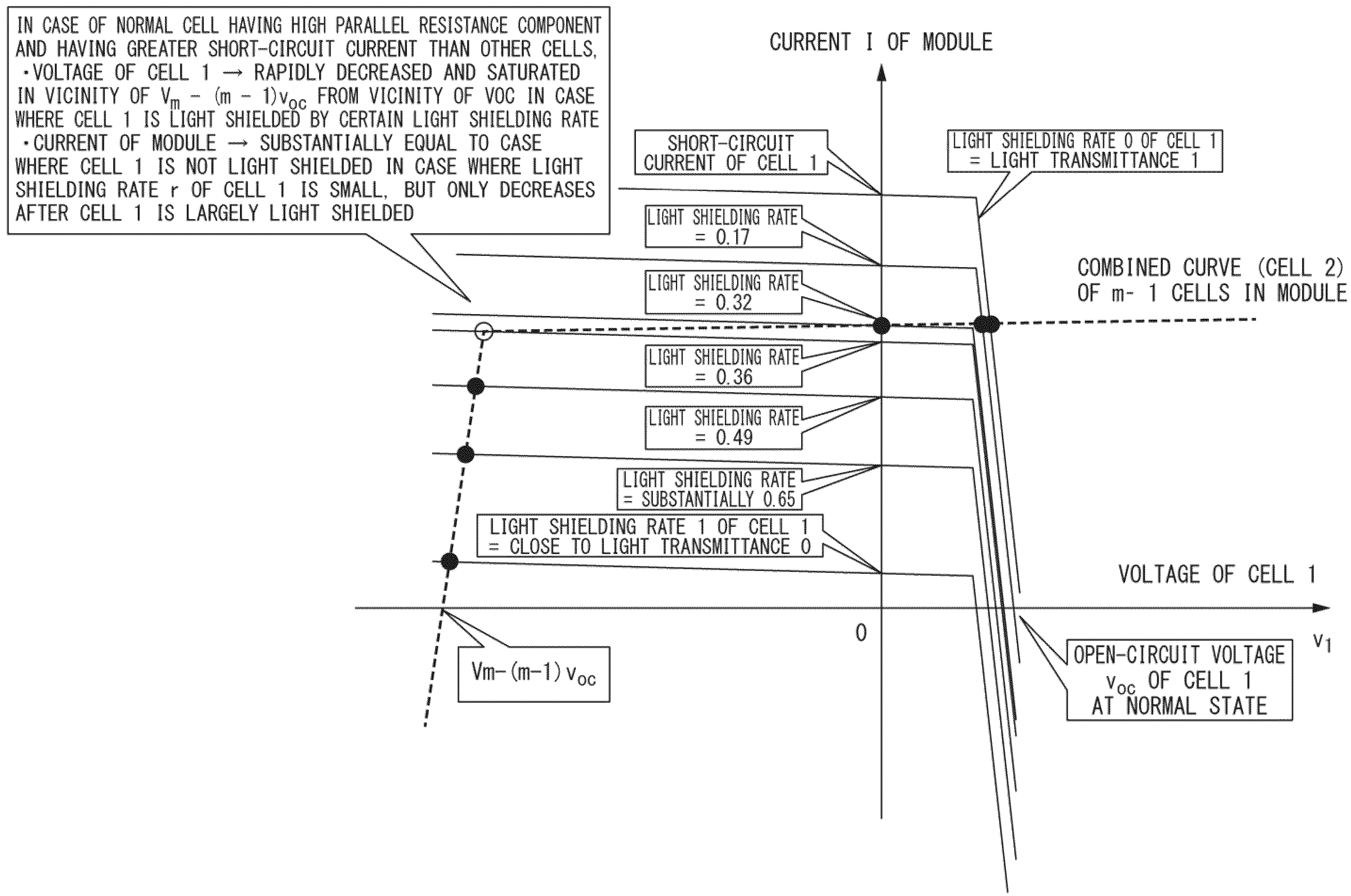
IN CASE OF NORMAL CELL HAVING HIGH PARALLEL RESISTANCE COMPONENT AND HAVING GREATER SHORT-CIRCUIT CURRENT THAN OTHER CELLS,
・VOLTAGE OF CELL 1 → RAPIDLY DECREASED AND SATURATED IN VICINITY OF $V_m$ − (m − 1)$v_{oc}$ FROM VICINITY OF VOC IN CASE WHERE CELL 1 IS LIGHT SHIELDED BY CERTAIN LIGHT SHIELDING RATE
・CURRENT OF MODULE → SUBSTANTIALLY EQUAL TO CASE WHERE CELL 1 IS NOT LIGHT SHIELDED IN CASE WHERE LIGHT SHIELDING RATE r OF CELL 1 IS SMALL, BUT ONLY DECREASES AFTER CELL 1 IS LARGELY LIGHT SHIELDED
CURRENT I OF MODULE
SHORT-CIRCUIT CURRENT OF CELL 1
LIGHT SHIELDING RATE 0 OF CELL 1 = LIGHT TRANSMITTANCE 1
LIGHT SHIELDING RATE = 0.17
COMBINED CURVE (CELL 2) OF m- 1 CELLS IN MODULE
LIGHT SHIELDING RATE = 0.32
LIGHT SHIELDING RATE = 0.36
LIGHT SHIELDING RATE = 0.49
LIGHT SHIELDING RATE = SUBSTANTIALLY 0.65
LIGHT SHIELDING RATE 1 OF CELL 1 = CLOSE TO LIGHT TRANSMITTANCE 0
VOLTAGE OF CELL 1
0
$v_1$
Vm−(m−1) $v_{oc}$
OPEN-CIRCUIT VOLTAGE $v_{oc}$ OF CELL 1 AT NORMAL STATE

FIG. 10

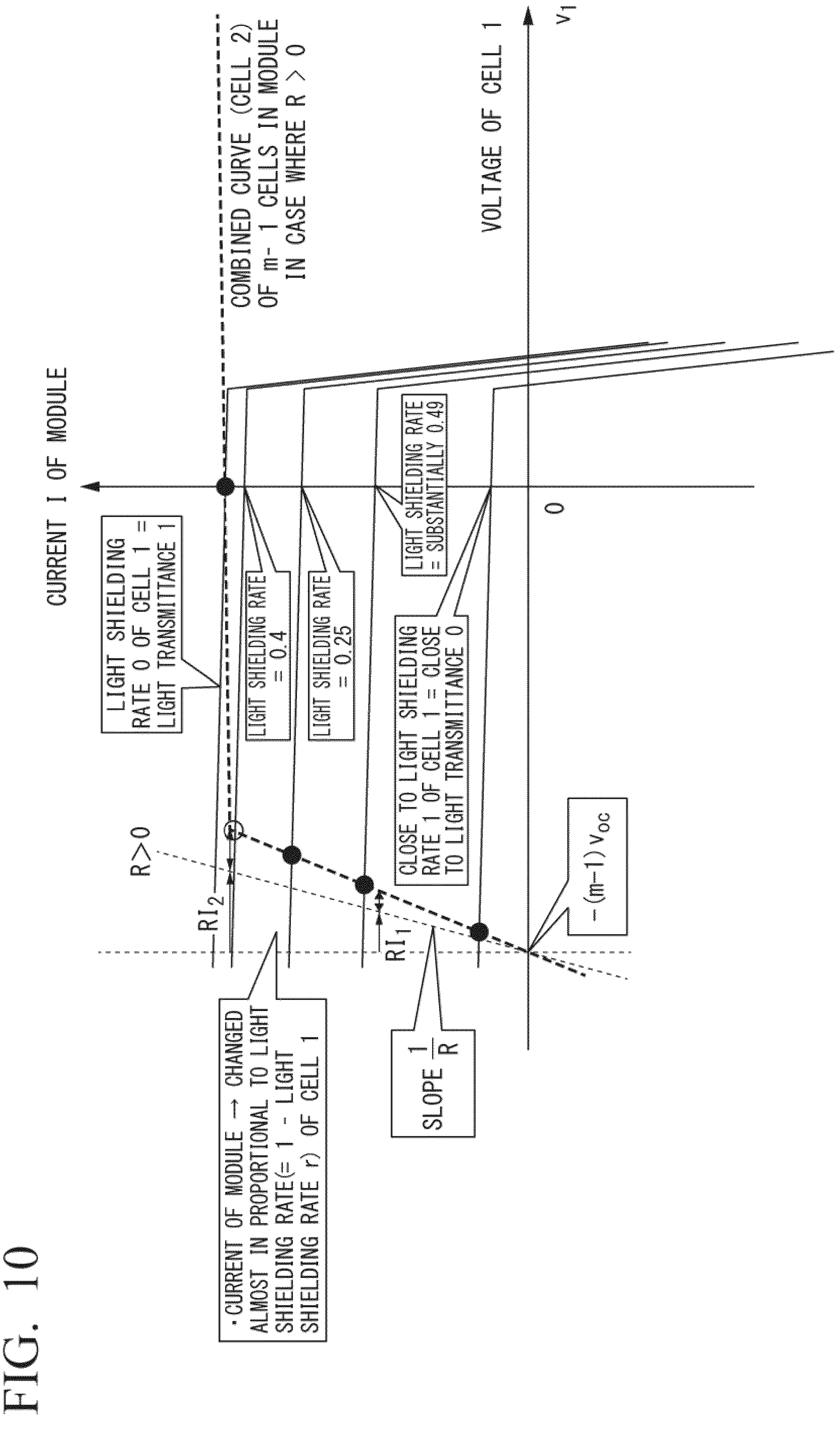
CURRENT I OF MODULE
COMBINED CURVE (CELL 2) OF m- 1 CELLS IN MODULE IN CASE WHERE R > 0
VOLTAGE OF CELL 1
$v_1$
LIGHT SHIELDING RATE 0 OF CELL 1 = LIGHT TRANSMITTANCE 1
LIGHT SHIELDING RATE = 0.4
LIGHT SHIELDING RATE = 0.25
LIGHT SHIELDING RATE = SUBSTANTIALLY 0.49
CLOSE TO LIGHT SHIELDING RATE 1 OF CELL 1 = CLOSE TO LIGHT TRANSMITTANCE 0
0
R>0
$RI_2$
$RI_1$
$-(m-1)\,v_{oc}$
SLOPE $\frac{1}{R}$
· CURRENT OF MODULE → CHANGED ALMOST IN PROPORTIONAL TO LIGHT SHIELDING RATE(= 1 - LIGHT SHIELDING RATE r) OF CELL 1

FIG. 11

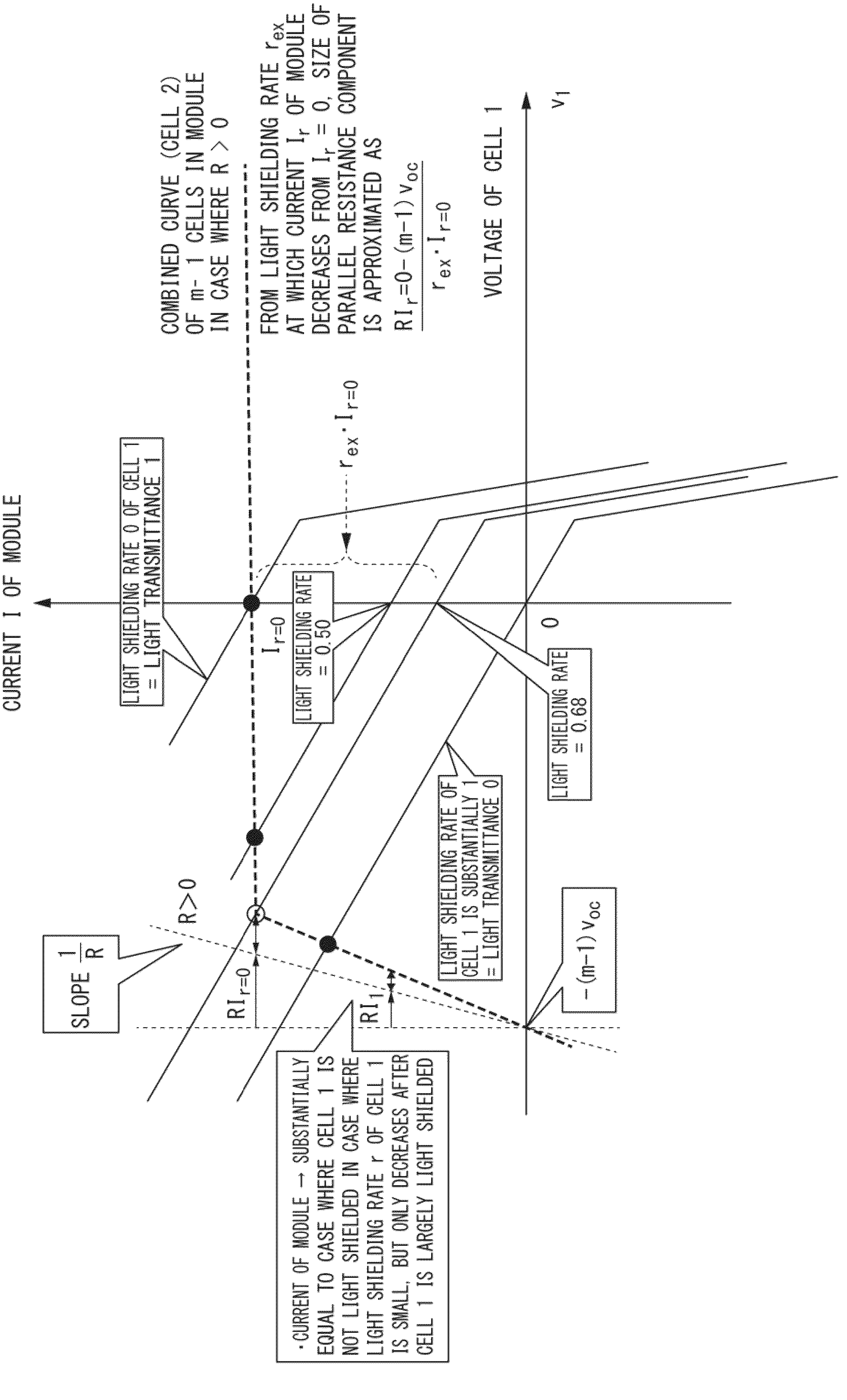
CURRENT I OF MODULE
VOLTAGE OF CELL 1
$v_1$
0
COMBINED CURVE (CELL 2) OF m- 1 CELLS IN MODULE IN CASE WHERE R > 0
FROM LIGHT SHIELDING RATE $r_{ex}$ AT WHICH CURRENT $I_r$ OF MODULE DECREASES FROM $I_r = 0$, SIZE OF PARALLEL RESISTANCE COMPONENT IS APPROXIMATED AS
$\frac{RI_{r=0} - (m-1) v_{oc}}{r_{ex} \cdot I_{r=0}}$
$r_{ex} \cdot I_{r=0}$
LIGHT SHIELDING RATE 0 OF CELL 1 = LIGHT TRANSMITTANCE 1
$I_{r=0}$
LIGHT SHIELDING RATE = 0.50
LIGHT SHIELDING RATE = 0.68
LIGHT SHIELDING RATE OF CELL 1 IS SUBSTANTIALLY 1 = LIGHT TRANSMITTANCE 0
$-(m-1) v_{oc}$
R>0
SLOPE $\frac{1}{R}$
$RI_{r=0}$
$RI_1$
·CURRENT OF MODULE → SUBSTANTIALLY EQUAL TO CASE WHERE CELL 1 IS NOT LIGHT SHIELDED IN CASE WHERE LIGHT SHIELDING RATE r OF CELL 1 IS SMALL, BUT ONLY DECREASES AFTER CELL 1 IS LARGELY LIGHT SHIELDED

FIG. 12

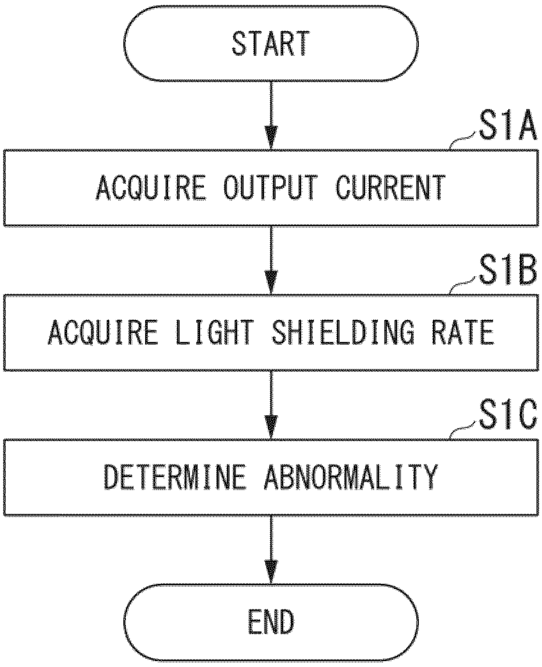
START
S1A
ACQUIRE OUTPUT CURRENT
S1B
ACQUIRE LIGHT SHIELDING RATE
S1C
DETERMINE ABNORMALITY
END

# FIG. 13

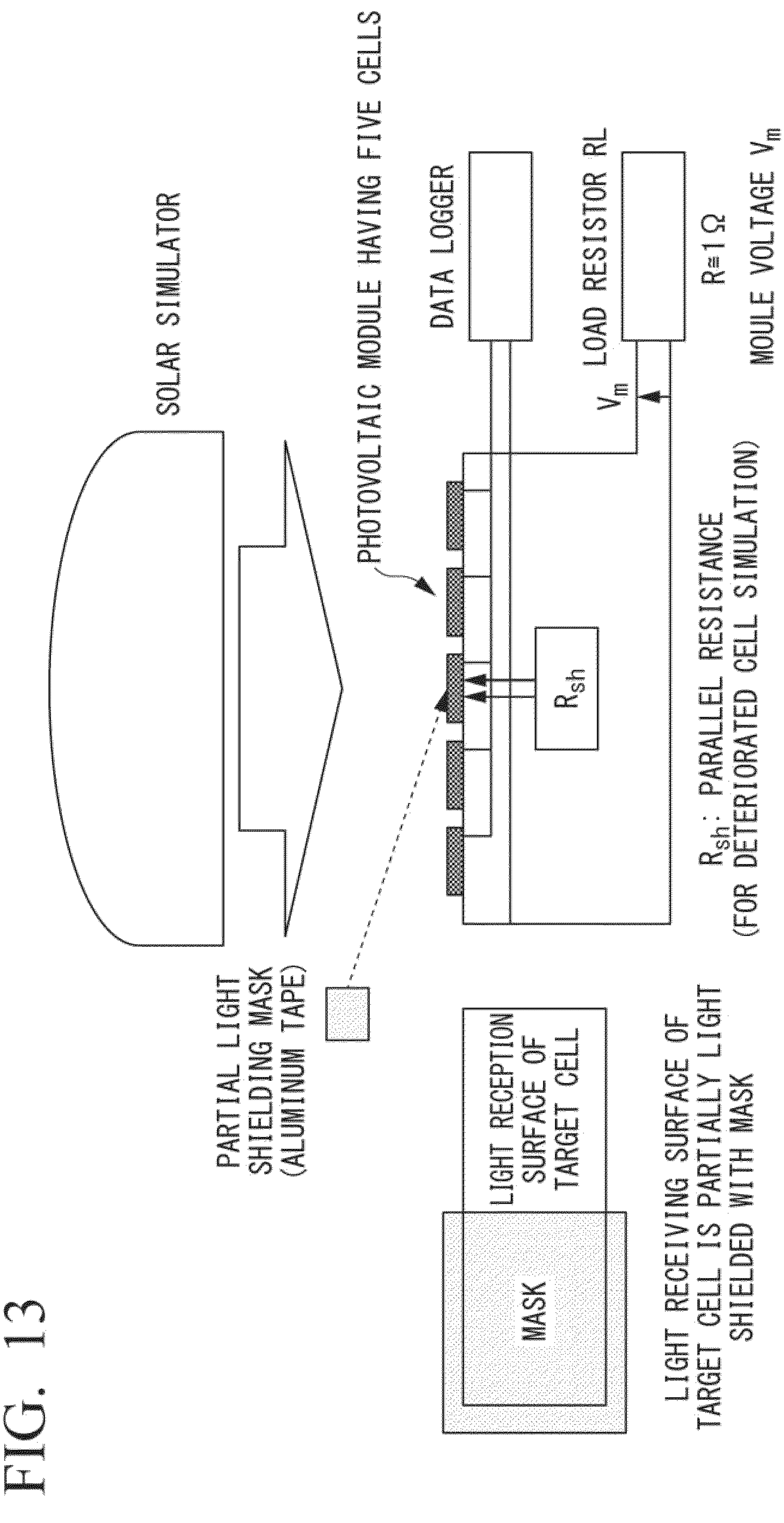
SOLAR SIMULATOR
PHOTOVOLTAIC MODULE HAVING FIVE CELLS
DATA LOGGER
$V_m$
LOAD RESISTOR RL
R≅1Ω
MOULE VOLTAGE $V_m$
$R_{sh}$
$R_{sh}$: PARALLEL RESISTANCE
(FOR DETERIORATED CELL SIMULATION)
PARTIAL LIGHT SHIELDING MASK (ALUMINUM TAPE)
LIGHT RECEPTION SURFACE OF TARGET CELL
MASK
LIGHT RECEIVING SURFACE OF TARGET CELL IS PARTIALLY LIGHT SHIELDED WITH MASK

FIG. 14

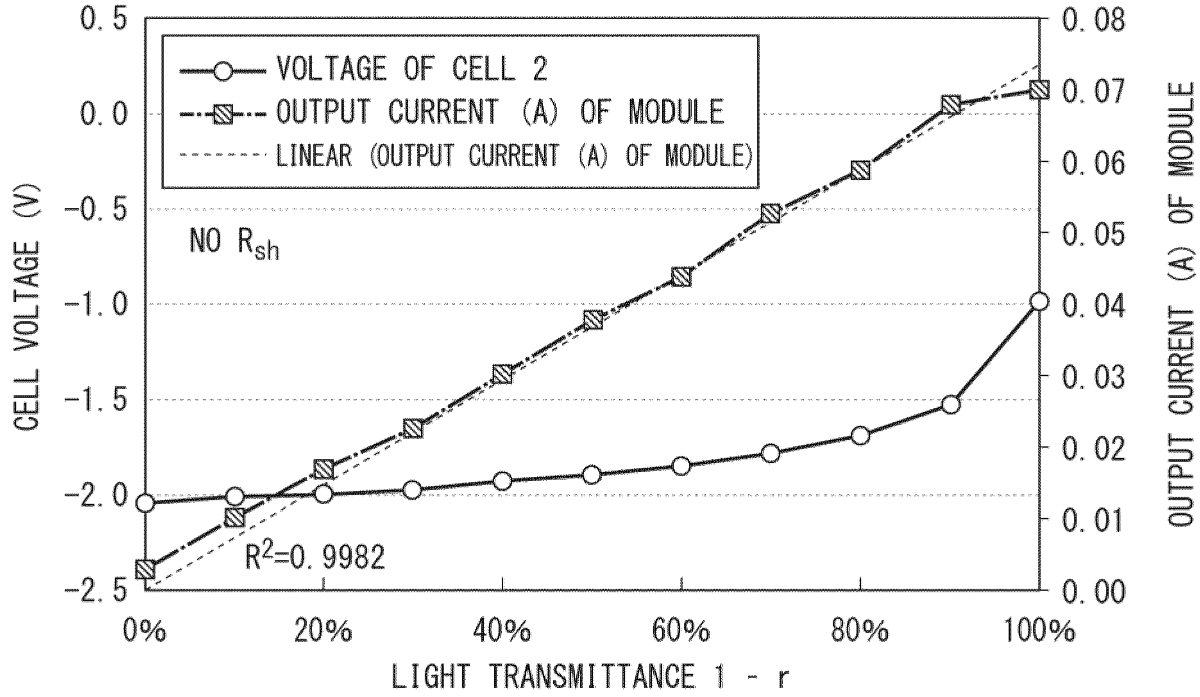
0.5
0.0
-0.5
-1.0
-1.5
-2.0
-2.5
0.08
0.07
0.06
0.05
0.04
0.03
0.02
0.01
0.00
VOLTAGE OF CELL 2
OUTPUT CURRENT (A) OF MODULE
LINEAR (OUTPUT CURRENT (A) OF MODULE)
NO $R_{sh}$
$R^2$=0.9982
CELL VOLTAGE (V)
OUTPUT CURRENT (A) OF MODULE
0%
20%
40%
60%
80%
100%
LIGHT TRANSMITTANCE 1 - r

FIG. 15

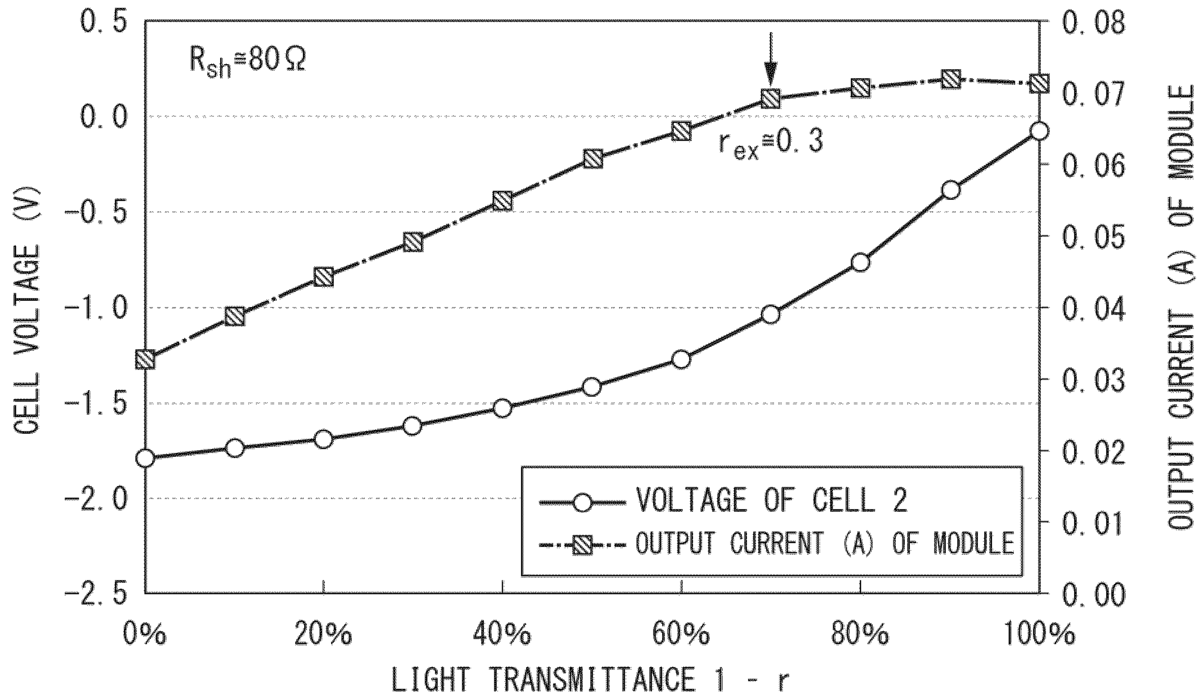
0.5
0.0
-0.5
-1.0
-1.5
-2.0
-2.5
0.08
0.07
0.06
0.05
0.04
0.03
0.02
0.01
0.00
$R_{sh}$≅80Ω
$r_{ex}$≅0.3
VOLTAGE OF CELL 2
OUTPUT CURRENT (A) OF MODULE
CELL VOLTAGE (V)
OUTPUT CURRENT (A) OF MODULE
0%
20%
40%
60%
80%
100%
LIGHT TRANSMITTANCE 1 - r

FIG. 16

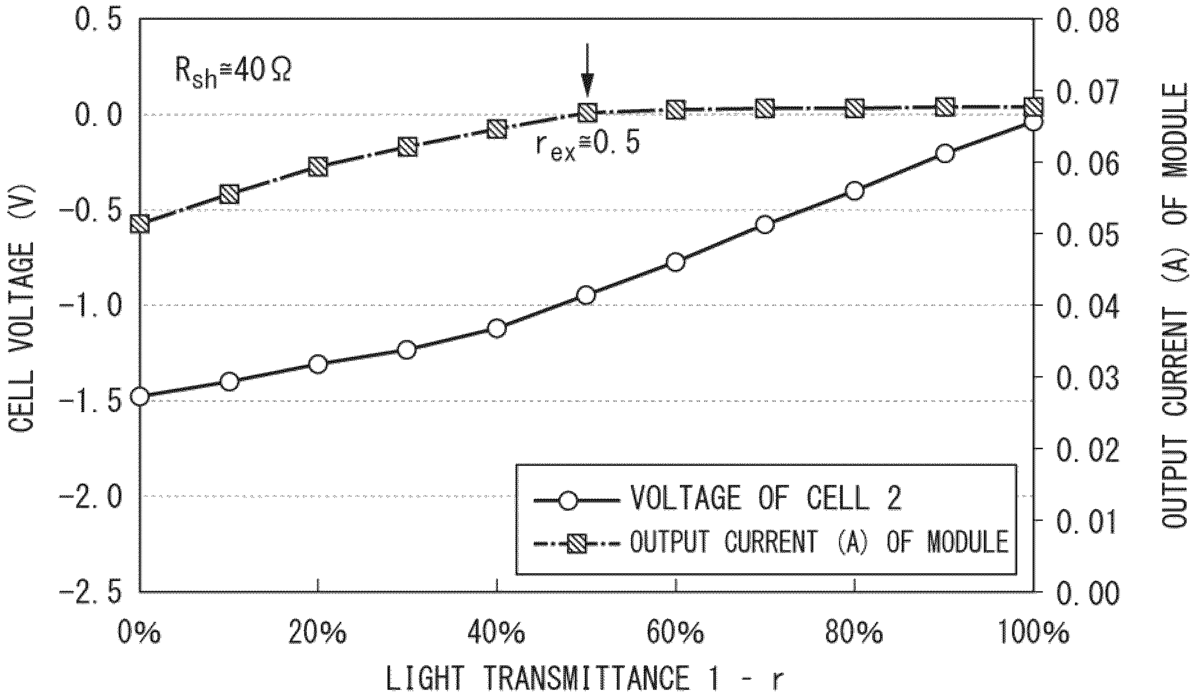

$R_{sh}$≅40Ω
$r_{ex}$≅0.5
CELL VOLTAGE (V)
OUTPUT CURRENT (A) OF MODULE
VOLTAGE OF CELL 2
OUTPUT CURRENT (A) OF MODULE
LIGHT TRANSMITTANCE 1 - r
0.5
0.0
-0.5
-1.0
-1.5
-2.0
-2.5
0.08
0.07
0.06
0.05
0.04
0.03
0.02
0.01
0.00
0%
20%
40%
60%
80%
100%


FIG. 17

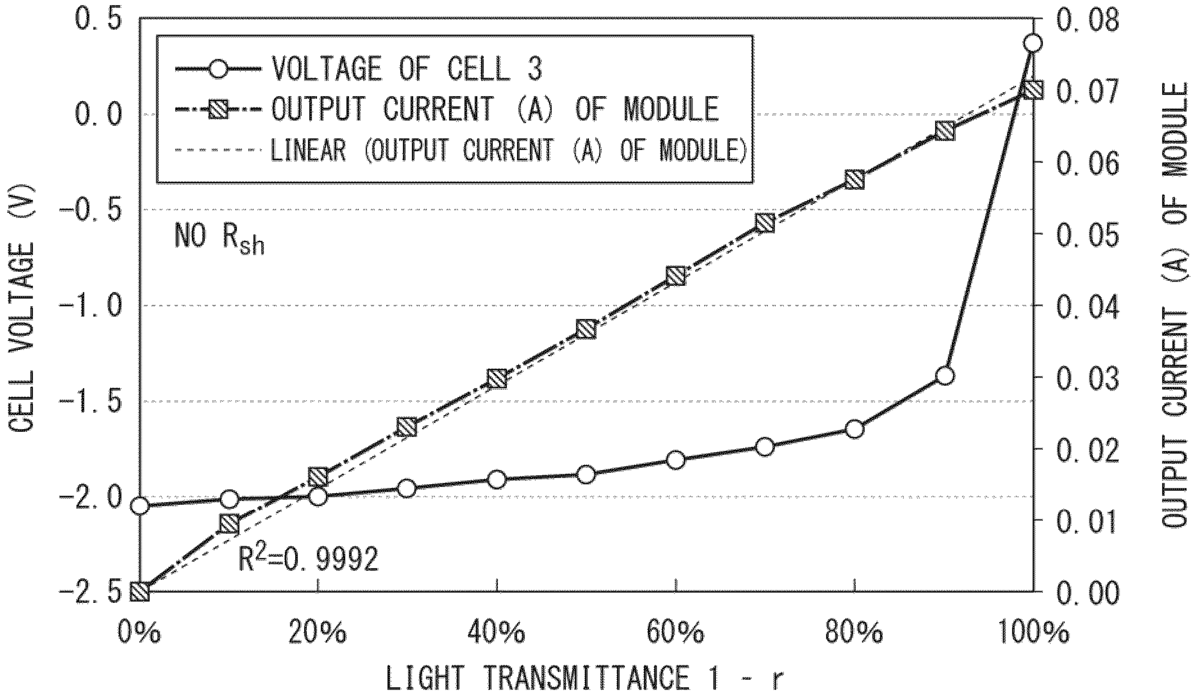

VOLTAGE OF CELL 3
OUTPUT CURRENT (A) OF MODULE
LINEAR (OUTPUT CURRENT (A) OF MODULE)
NO $R_{sh}$
$R^2$=0.9992
CELL VOLTAGE (V)
OUTPUT CURRENT (A) OF MODULE
LIGHT TRANSMITTANCE 1 - r
0.5
0.0
-0.5
-1.0
-1.5
-2.0
-2.5
0.08
0.07
0.06
0.05
0.04
0.03
0.02
0.01
0.00
0%
20%
40%
60%
80%
100%

# FIG. 18

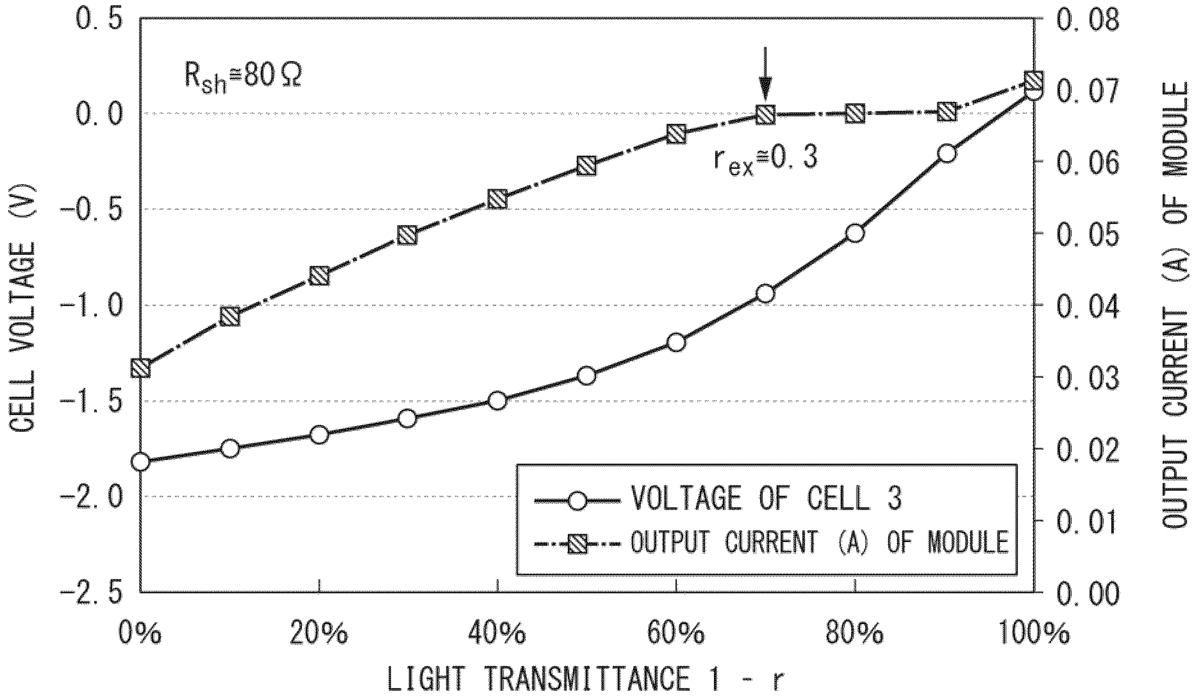

0.5
0.0
-0.5
-1.0
-1.5
-2.0
-2.5
CELL VOLTAGE (V)
$R_{sh}$≅80Ω
$r_{ex}$≅0.3
0.08
0.07
0.06
0.05
0.04
0.03
0.02
0.01
0.00
OUTPUT CURRENT (A) OF MODULE
VOLTAGE OF CELL 3
OUTPUT CURRENT (A) OF MODULE
0%
20%
40%
60%
80%
100%
LIGHT TRANSMITTANCE 1 - r


# FIG. 19

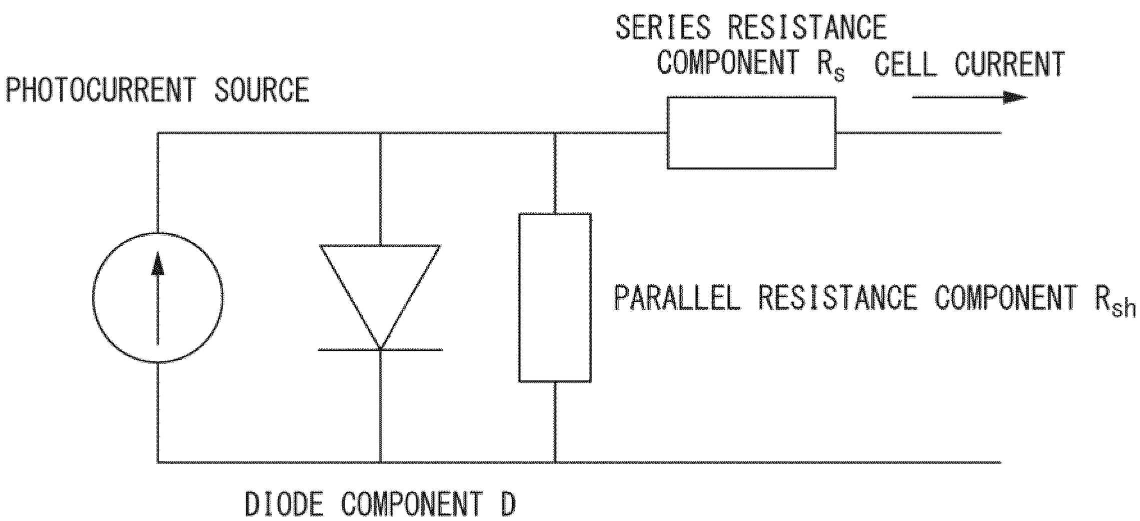

SERIES RESISTANCE COMPONENT $R_s$
CELL CURRENT
PHOTOCURRENT SOURCE
PARALLEL RESISTANCE COMPONENT $R_{sh}$
DIODE COMPONENT D

## INTERNATIONAL SEARCH REPORT

International application No. **PCT/JP2023/000587**

**A. CLASSIFICATION OF SUBJECT MATTER**

***H02S 50/00***(2014.01)i
FI: H02S50/00

According to International Patent Classification (IPC) or to both national classification and IPC

**B. FIELDS SEARCHED**

Minimum documentation searched (classification system followed by classification symbols)

H01L31/04-31/078; H02S50/00-50/15

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JSTChina/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | WO 2017/009892 A1 (HITACHI SYSTEMS, LTD.) 19 January 2017 (2017-01-19) entire text, all drawings | 1-11 |
| A | JP 2019-47583 A (FUJI ELECTRIC CO., LTD.) 22 March 2019 (2019-03-22) entire text, all drawings | 1-11 |
| A | JP 2019-201533 A (MIRAIT CORP.) 21 November 2019 (2019-11-21) entire text, all drawings | 1-11 |
| A | JP 2011-108831 A (LASERTEC CORP.) 02 June 2011 (2011-06-02) entire text, all drawings | 1-11 |
| A | WO 2020/122105 A1 (TEIKYO UNIV.) 18 June 2020 (2020-06-18) entire text, all drawings | 1-11 |
| A | KOBAYASHI, Yasuyuki, KISU, Shunsuke. A proposal of a procedure to estimate a standard line for contactless estimation of a solar cell voltage in a module using modulated light. Electrical Engineering in Japan. September 2020, vol. 212, no. 1-4, pages 23-34, DOI: 10.1002/eej.23271 entire text, all drawings | 1-11 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **24 March 2023** | **04 April 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/000587**

| Patent document cited in search report | Publication date (day/month/year) | Patent family member(s) | Publication date (day/month/year) |
|---|---|---|---|
| WO 2017/009892 A1 | 19 January 2017 | US 2018/0198405 A1<br>entire text, all drawings<br>EP 3322090 A1 | |
| JP 2019-47583 A | 22 March 2019 | (Family: none) | |
| JP 2019-201533 A | 21 November 2019 | (Family: none) | |
| JP 2011-108831 A | 02 June 2011 | (Family: none) | |
| WO 2020/122105 A1 | 18 June 2020 | US 2022/0038053 A1<br>entire text, all drawings<br>EP 3896846 A1<br>CN 113169710 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022011933 A
- JP 6712816 B
- WO 2020122105 A


### Non-patent literature cited in the description


- **Y NAGATA** ; **M. YAMANAKA** ; **H. OHNO**. Partial light shielding and hot spots in PV cells. *Proceedings of the Solar and Wind Energy Symposium*, 2014, 63-66